(19) Europäisches Patentamt

European Patent Office

Office européen des brevets

(11) **EP 1 164 358 B1**

(12) **EUROPÄISCHE PATENTSCHRIFT**

(45) Veröffentlichungstag und Bekanntmachung des Hinweises auf die Patenterteilung:
**24.08.2005 Patentblatt 2005/34**

(51) Int Cl.$^7$: **G01D 5/20**

(21) Anmeldenummer: **00890192.8**

(22) Anmeldetag: **16.06.2000**

(54) **Induktives Längenmesssystem**

Inductive length measuring system

Système inductif de mesure de longueur

(84) Benannte Vertragsstaaten:
**AT CH DE FR GB IT LI**

(43) Veröffentlichungstag der Anmeldung:
**19.12.2001 Patentblatt 2001/51**

(73) Patentinhaber: **AMO Automatisierung Messtechnik Optik GmbH**
**5280 Braunau am Inn (AT)**

(72) Erfinder: **Vasiloiu, Victor, Dipl.-Ing.**
**5280 Braunau (AT)**

(74) Vertreter: **Patentanwälte**
**BARGER, PISO & PARTNER**
**Mahlerstrasse 9**
**Postfach 96**
**1015 Wien (AT)**

(56) Entgegenhaltungen:
**EP-A- 0 743 508          DE-A- 19 621 886**
**GB-A- 1 554 388          US-A- 4 737 698**
**US-A- 5 434 504**

**Beschreibung**

Die Erfindung bezieht sich auf eine induktive Messeinrichtung zur Positionserfassung mit einer Spulenstruktur und einer Maßverkörperung, die mindestens eine Teilung in Bereiche unterschiedlicher Reluktanz oder Leitfähigkeit aufweist, wobei die Spulenstruktur zumindest eine Emitterspule zur Erzeugung eines Magnetfeldes und zumindest zwei Empfängerspulenpaare umfasst, wobei jedes Paar zwei differenziell zueinander geschaltete Empfängerelemente zur Erfassung eines Magnetfeldes aufweist, wobei die Emitterspule mit den Empfängerelementen in Abhängigkeit der relativen Lage der Spulenstruktur zur Maßverkörperung induktiv gekoppelt ist.

Es geht dabei um ein induktives Längenmesssystem, das durch die Abtastung von einem Maßstab mit einer Teilung von periodisch variabler Reluktanz und einem Spulensystem in einer linearen Anordnung Informationen betreffend die Position bzw. die Bewegung des Spulensystems bezüglich des Maßstabs erfassen kann.

Ein derartiges Längenmesssystem ist aus der DE 19803249A1 bekannt.

Eine allgemeine Gegenüberstellung bekannter Messsysteme gibt folgendes Ergebnis:

Hauptmerkmale optoelektronischer Messsysteme:

hohe Genauigkeit für feine Teilungsperioden, extrem schmutzempfindlich, geringe Schock- Schwingungsbelastung

Hauptmerkmale magnetischer Messsysteme:

Mittlere Genauigkeit durch Teilungsgenauigkeit und Interpolationsfehler innerhalb der Teilungsperiode (Oberwellenanteil und Signalabweichungen von einer Periode zu der anderen.); polarisierter Maßstab zieht magnetische Partikel an und kann durch äußere magnetische Störfelder gelöscht oder beschädigt werden.

Hauptmerkmale induktiver Messsysteme:

Viele Bauarten sind bekannt, allgemein eine sehr robuste Bauart, äußerst geringe Beeinflussung durch Temperatur, basierend auf dem Transformatorprinzip, wobei die Übertragung zwischen Primär- und Sekundärspulen durch ein sich relativ zu den Spulen bewegendes Glied beeinflusst wird.

Einige konstruktive Beispiele für induktive Messsysteme:

Der Wandler vom Typ INDUCTOSYN (registrierte Marke) besteht aus zwei Elementen, Maßstab und Schlitten, beide weisen in der Messfläche aktive primär- und sekundär- meanderförmige Planarwicklungen auf. Das Gerät hat eine hohe Genauigkeit, braucht aber durch sein Abtastprinzip eine große Kopplungsfläche zwischen den zwei Elementen. Es funktioniert in niedrigen Trägerfrequenzbereichen was die Verfahrgeschwindigkeit begrenzt und ist sehr aufwendig in der Konstruktion.

Induktive Taster sind zylinderförmige differentiale Transformatoren, bestehend aus einer Primärspule, gekoppelt mit zwei entgegen-geschalteten, konzentrisch gewickelten Sekundärspulen und einem Kem mit einer Marke unterschiedlicher Reluktanz. Das Gerät wandelt für einen definierten Messbereich, die relative Lage der Plunger-Kernspulen in ein annähernd lineares Ausgangssignal. Für kleine Messhübe können hohe Genauigkeiten erreicht werden, das Gerät ist aber nicht geeignet für größere Messhübe und dynamische Anwendungen.

In der EP 0557608 B1 wird eine Spiralspulenstruktur beschrieben, welche in Mehrlagen-Metall-Isolierschicht auf einen weich- oder hartmagnetischen Träger in Dickschichttechnik aufgebaut ist. Ein Messgerät funktioniert auf dem Prinzip nur in Frequenzbereiche die nicht das Spulensubstrat in nichtlinearen magnetischen Bereichen bringt und durch die Phasenverschiebungserfassung in den nachgeschalteten Schwingkreis nicht für hohe Genauigkeiten geeignet.

Von selben Anmelder wird in der DE 19813497A1 das angewandte Messprinzip für eine Art "induktives Potentiometer" beschrieben. In dem Fall wird die relativ grobe erreichbare Genauigkeit stark beeinflusst durch Kernkippungen gegenüber Spulenebene.

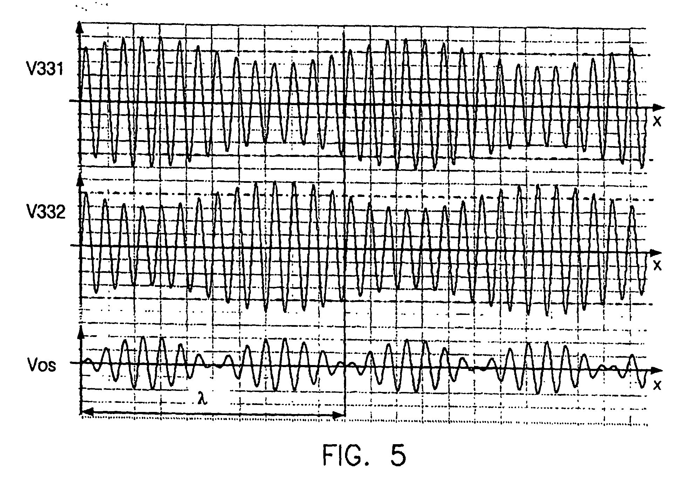

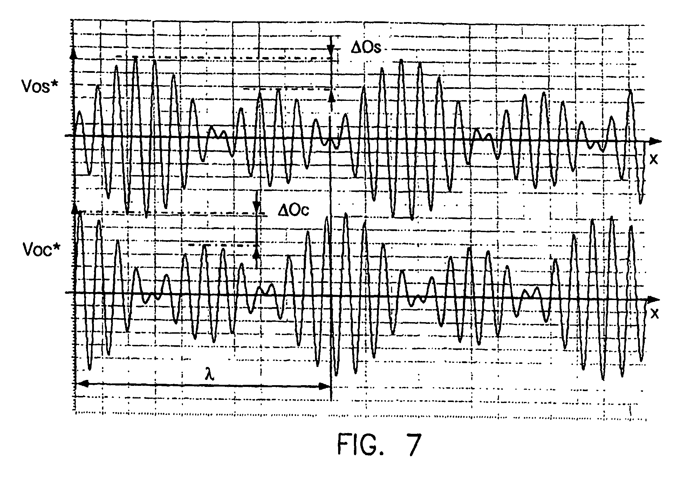

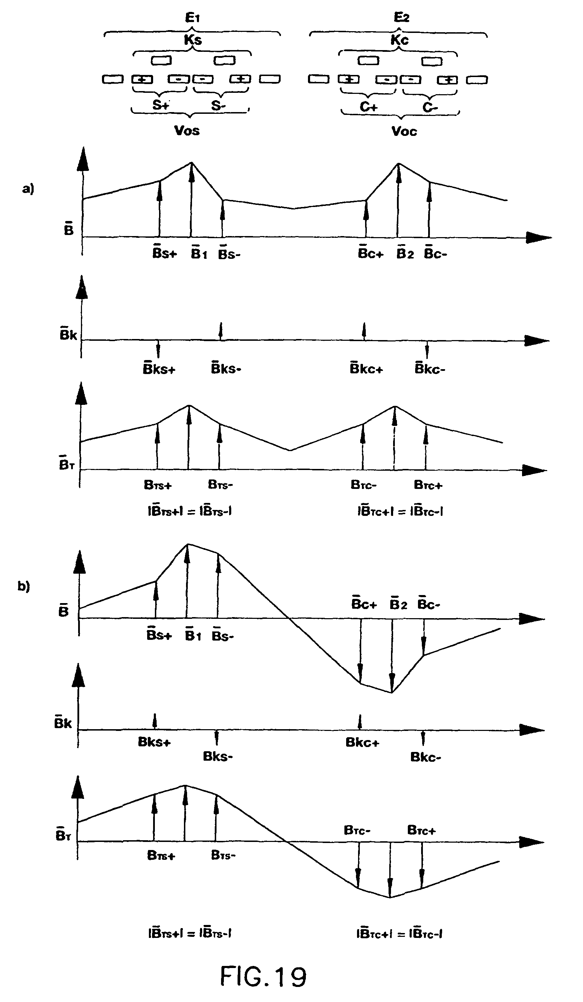

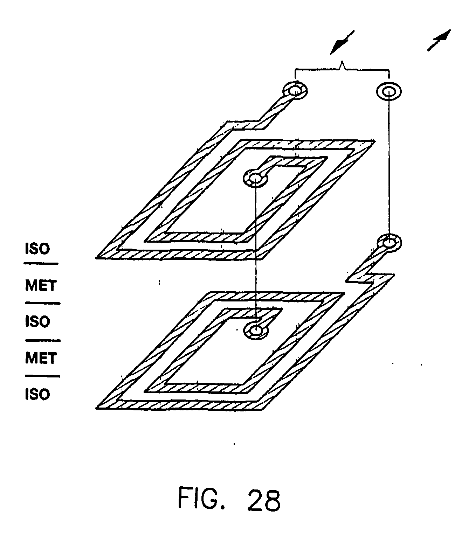

Die US 4,737,698 A beschreibt ebenfalls eine induktive Messeinrichtung mit planaren bzw. spatialen Spulenanordnungen, die nach dem Wirbelstromprinzip (Eddy currents) durch einen sich in Bewegung befindlichen leitfähigen Schirm ein positionsabhängiges Signal generieren. Eine konkrete Spulenanordnung mit mindestens zwei zueinander phasenverschobenen Messkanälen (z.B. Sinus und Cosinus), die für die Erkennung der Bewegungsrichtung notwendig sind, ist in den Fig. 19 und 28 dargestellt. In beiden Fig. ist eine unendlich lange Erregerspule oder Windung (z.B. Bezugszeichen 121 in Fig. 19) ohne Abschlussleiter dargestellt. Jede Art von Windungsabschluss würde jedoch als geometrische Asymmetrie die induzierten Spannungen in den beiden für jeden Kanal differenziell zueinander geschalteten Wicklungen aus dem Gleichgewicht bringen und die lageabhängigen Signale nicht wie gewünscht und in Fig. 7 dargestellt, sondern davon abweichend, ungefähr wie in Fig. 5 dargestellt, produzieren. Es wird in dieser Druckschrift keine Möglichkeit aufgezeigt, einen Abgleich zwischen den differentiell zueinander geschalteten Wicklungen zu erreichen und so ein ideales Signal zu generieren.

In der EP 0805339A1 wird eine Messeinrichtung beschrieben, welche auf einem ähnlichen Funktionsprinzip, wie im vorherigen Beispiel dargestellt, funktioniert. Das Gerät verwendet eine planare mehrlagige Transformatorspulenanordnung für die Abtastung von einem verzahnten Messrad. Diese Anordnung besteht aus einer Primärspule in einer Ebene und zwei gegeneinander in Messrichtung versetzte Senkundärspulen. Die einzelnen Sekundärspulen bilden entweder zwei Messkanäle die durch den örtlichen Phasenversatz der Amplituden modulierte Signale die Richtungserkennung ermöglichen oder einen Messkanal wobei die Spulen differential geschaltet sind. In der ersten konstruktiven Ausführung (die ein nicht differentiale Anordnung zeigt), sind die erzeugten Signale, mit einem schwachen Modulationsgrad, von parasitären Einflüssen wie Temperatur, geometrischem Kippen der Spulen gegenüber dem Messrad usw. stark beeinflusst, in der zweiten Ausführung ist die Bewegungsrichtungserkennung nur für hohe Geschwindigkeiten möglich (für langsame Punkt zu Punkt Positionierung tendiert die durch Geschwindigkeit induzierte Phasenverschiebung Richtung Null). Diese Druckschrift befasst sich nicht mit eventuellen Induktionswechselwirkungen von mehreren Spulen in ein und derselben Struktur. Das beschriebene Gerät, wie auch in den Beispielen der einfach digitalisierenden Auswertelektronik gezeigt, eignet sich nur für grobe Bewegungserfassung.

In der DE 19803249A1 (Fa. Mitutoyo) werden induktive, absolut arbeitende Positionswandler beschrieben. Dieses Gerät ist hauptsächlich für Schiebelehren konzipiert. Für die absolute Wegerfassung werden mehrere parallel zueinander angeordnete Messspuren abgetastet. Die Messeinrichtung besteht aus einem metallstrukturierten Maßstab , eingebettet in dem Körper einer Schiebelehre und einer prinzipiell differentiell arbeitenden Spulenanordnung in dem dazu genau geführten Schlitten untergebracht. Nur in Betrachtung der Inkrementalspur (feinste Meßspur) wird eine periodische Metallteilung von einem Spulenuntersystem abgetastet. Dieses planare System besteht hauptsächlich aus einer Erregerspule und zwei Empfängerspulenkanälen die mit der Ersten induktiv gekoppelt sind und über die Messteilung bei einer relativen Bewegung die Position erfassen kann. Die zwei Empfängerspulenkanäle sind für die Bewegungsrichtungserkennung zueinander phasenverschoben angeordnet (geometrisch zueinander versetzt).

Die Erregerspulenwindungen umgeben in der Strukturebene die Empfängerspulen die für jeden Kanal aus mehreren differentiell angeschlossenen Einzelwindungen bestehen. Das durch die Erregerspule erzeugte Magnetfeld hat keine gleichmäßige Verteilung über den ganzen inneren Spulenbereich, sondern ist wesentlich stärker in der Nähe seiner Windungen und nimmt in Richtung Spulenmitte ab. Durch diesen Effekt ist es geometrisch unmöglich zwei differentielle, versetzte Spulen unter gleicher Feldform und Feldstärke innerhalb eines Emitterrahmens zu plazieren. Das bedeutet, daß für mindestens eine der zwei Messkanten die (vereinfacht dargestellt) als zwei gegeneinander geschaltete differentielle Empfängerspulen geschaltet sind, nicht symmetrisch zu dem Emitterrahmen angeordnet sind und durch unterschiedliche Magnetfeldstärken durchflossen sind. Dadurch ergibt sich im Falle einer relativen Bewegung in Messrichtung zum Maßstab, nach Differenzbildung der induzierten Spannungen, daß das modulierte Nutzsignal nicht um "Null" schwingt, sondern um einen Wert schwankt, der proportional zu der statischen Feldstärkedifferenz in den zwei Empfängerflächen ist. Dieser Wert, als Signaloffset bezeichnet, kann fast unmöglich in einer folgenden Auswerteelektronik komplett abgeglichen werden, da seine Amplitude zum Teil von Bewegungssekundäreffekte wie Abstand Spulen-Maßstab oder relative Kippungen beeinflußt wird und dadurch nicht konstant für einen ganzen Meßvorgang ist.

Der Verfasser dieser Patentschrift erkennt das Problem (Seite 10, Absatz 25), der konstruktive Vorschlag ist aber nicht wirksam, da die Plazierung der unsymmetrischen Empfängerwicklungspaare weiter weg von den Emitterwicklungen in die Mitte der Emitterspulen, zwar diese in einem Bereich bringt wo das Erregerfeld und seine Gradienten schwächer sind aber damit verringert sich auch das induzierte Nutzsignal, so daß das Verhältnis Nutzsignal zum Signaloffset weiterhin ungünstig bleibt.

Es ist die Aufgabe der Erfindung, die Vorteile der optoelektronischen Längenmesseinrichtungen mit hohen Genauigkeiten und hohen erreichbaren Auflösungen im Bereich ≤ 1μm mit den Vorteilen der induktiven Einrichtungen, mit hoher Robustheit und Stabilität gegen Umwelteinflüsse, zu vereinen.

Die Aufgabe umfasst, eine durch konstruktive Maßnahmen in sich kompensierte Sensorstruktur in Verbindung mit der Maßverkörperung und Auswerteelektronik zu schaffen.

Erfindungsgemäß wird diese Aufgabe mit einer Induktiven Messeinrichtung der eingangs erwähnten Art dadurch gelöst, dass die Spulenstruktur zumindest ein Kompensationselement zur Flussanpassung aufweist, wobei das Kompensationselement zumindest eine zusätzliche Kompensationsemitterspule zur Erzeugung eines Kompensationsfeldes umfasst.

In einer Alternativlösung wird die Aufgabe mit einer Induktiven Messeinrichtung der eingangs erwähnten Art dadurch gelöst, dass die Spulenstruktur zumindest ein Kompensationselement zur Flussanpassung aufweist, wobei das Kompensationselement zur Flussanpassung unterschiedliche Geometrien der differentiell zueinander geschalteten Empfängerelemente umfasst.

In einer weiteren Alternativlösung wird die Aufgabe mit einer Induktiven Messeinrichtung der eingangs erwähnten Art dadurch gelöst, dass die Spulenstruktur zumindest ein Kompensationselement zur Flussanpassung aufweist, wobei das Kompensationselement zumindest ein zusätzliches mit einem Empfängerelement zusammengeschaltetes Kompensationsempfängerelement umfasst.

Die weiters beschriebene Messeinrichtung eignet sich besonders durch die hohe Genauigkeit in μm Bereich und die hohe erreichbare Systemdynamik für Prozesssteuerungen in denen Maschinenelemente genau positioniert werden müssen.

Zu den vorherigen Vorteilen ist besonders der hohe Miniatuisierungsgrad und die günstigen Kosten der Herstellungstechnologie für Abtastsensorik und die Maßverkörperung zu erwähnen.

Bevorzugte Ausführungsformen der Erfindung sind in den Unteransprüchen enthalten.

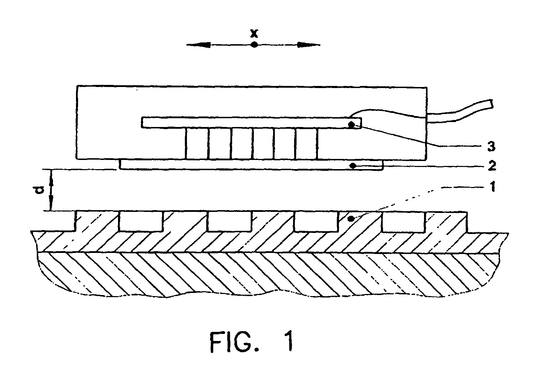

Gemäß der Erfindung besteht das Gerät grundsätzlich aus drei Elementen (Fig. 1) und zwar Maßverkörperung (1), eine inaktive Skala mit periodischer Teilung in Längsrichtung, kompensierte Spulenstruktur (2) die induktive zusammengekoppelte Emitter und Emfängerspulen beinhaltet und eine zu dieser Struktur angeschlossene Auswerteelektronik (3) die einerseits die Emitterspulen versorgt und andererseits die von der Struktur erzeugte Meßsignale auswertet.

Die Maßverkörperung ist fest verbunden mit einem ersten Maschinenteil und die Spulenstruktur zusammen mit der Auswerteelektronik (Abtasteinheit genannt) mit einem zweiten.

Bei der relativen Bewegung zwischen den zwei Maschinenteilen in Längsrichtung (X) wird das Emitterfeld in der Empfängerebene durch die abwechselnd unterschiedliche Bereiche der Meßteilung in der Maßverkörperung moduliert und von den Empfängerspulen erfasst und als Meßinformation an der Auswerteelektronik weitergeleitet.

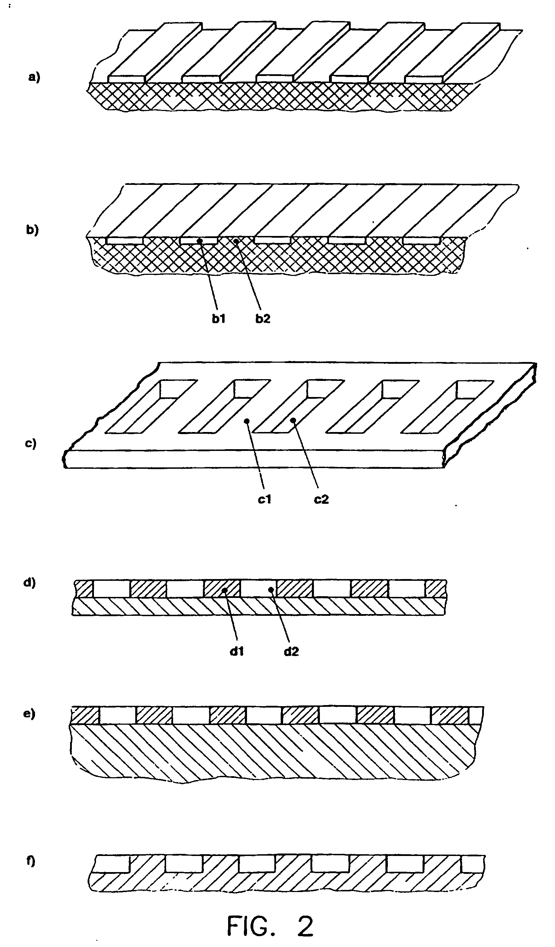

Das Meßsystem kann grundsätzlich auf zwei Funktionsprinzipien beruhend betrieben werden, die sich durch geometrische Verhältnisse, konstruktive Einzelzeiten und Erregerfrequenz unterscheiden. Das erste Funktionsprinzip basiert auf der Abtastung einer Skala mit periodisch abwechselnden Bereichen von unterschiedlicher elektrische Leitfähigkeit (Fig.2a und 2b). Durch die Dimensionierung des Systems, die von den Emitterspulen in den leitfähigeren Bereichen des Maßstabes induzierten Wirbelströme und dadurch eigenerzeugten elektromagnetischen Felder wirken gegen das Emitterfeld, sodaß in der Empfängerspulenebene in diesen Bereichen eine Abschwächung des gesamten Feldes entsteht. Diese periodische, lagenabhängige Feldstruktur wird von den Empfängerspulen erfasst und von der Folgeelektronik weiterverarbeitet.

Das zweite Funktionsprinzip basiert auf der Abtastung einer Skala aus weichmagnetischem Stoff wobei durch eine periodischer Strukturierung der Maßverkörperung Bereiche von unterschiedlicher Reluktanz entstehen (Fig.2c). Die Bereiche mit geringen Reluktanzen (Materialstege, Zähne) wirken für das von den Emitterspulen erzeugte Feld als Konzentratoren und bei einer relativen Bewegung der Maßverkörperung zu der Abtasteinheit in Längsrichtung wird dieses periodische Feldprofil von den Empfängerspulen erfasst.

Je nach Funktionsprinzip und Herstellungsmöglichkeiten kann die Maßverkörperung (Fig. 1.1 und Fig. 2) durch eine der folgenden Methoden realisiert werden:

Dünn- oder Dickschichttechnik: Strukturierung der Teilung in einer Metallschicht auf ein Isoliersubstrat (Fig. 2a und 2b); Strukturierung einer Metallfolie durch Ätzen oder Stanzen (Fig. 2c); Zusammenbauen einer strukturierten Folie (Fig. 2c) auf ein Metallträgerband (Fig. 2d); Montage einer strukturierten Folie auf ein massiven Träger oder Maschinenteil Herstellung einer Teilung direkt in einem massiven Träger oder Metallfolie durch Ätzen oder mechanische Bearbeitung.

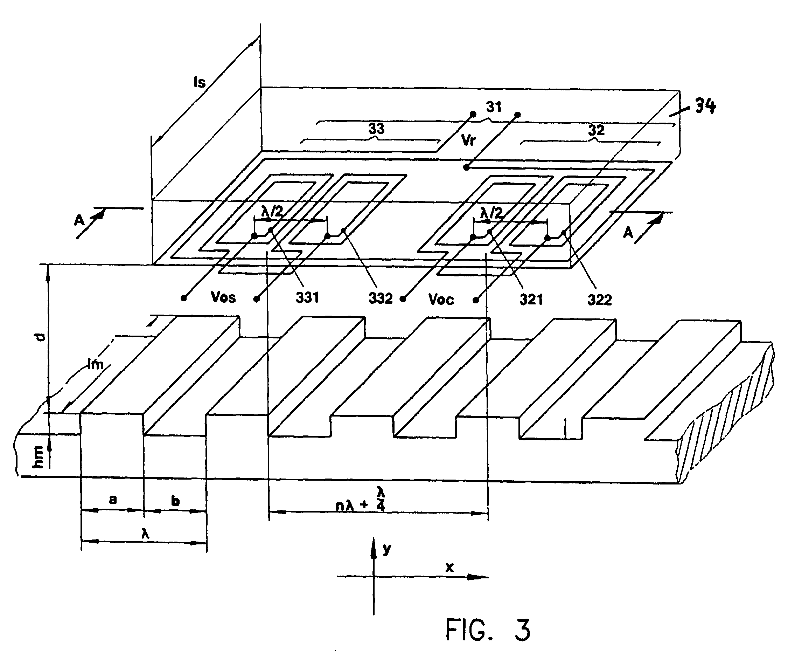

Die Sensorstruktur (Fig. 1.2 und Fig. 3) bestehend aus einer mehrlagigen (Metall-Isolierschicht-Kombination mit durchkontaktierten Anschlüssen) Spiralspulenanordnung die auf ein Substrat (34) aufgebracht wird, wird hauptsächlich die Emitterspule (31) mit einer Wechselspannung versorgt.

$$V_R = U_o \sin \omega t \tag{1.1}$$

Diese Erregerspannung muß nicht unbedingt sinusförmig sein, sondern je nach den konstruktiven Daten kann Rechteck, Dreieck oder dergleichen ausgeführt werden, was nicht die weiteren Betrachtungen beeinflußt.

Das Empfängerspulensystem, vereinfacht in Fig. 3 dargestellt, weist zwei geometrisch phasenverschobene ($\varphi$) Empfängerspulenpaare auf (32 und 33), wobei jedes der zwei Empfängerspulenpaare aus zwei differentiell geschalteten gegenphasigen ($\lambda/2$) Spulenelementen mit gleichen Form und Windungszahlen (331, 332 und 321, 322) besteht.

Abhängig von der relativen Lage in Messrichtung X zwischen Sensorstruktur und Maßverkörperung werden in den Empfängerspulen folgende Idealspannungen induziert. (siehe Diagramm Fig. 5)

$$V_{331} = K_{10} U_0 \sin \omega t + K_{11} U_0 \sin (2\pi x/\lambda) \sin \omega t \tag{1.2}$$

$$V_{332} = K_{20} U_0 \sin \omega t + K_{21} U_0 \sin (2\pi x/\lambda + \pi) \sin \omega t \tag{1.3}$$

und

$$V_{321} = K_{10} U_0 \sin \omega t + K_{11} U_0 \sin (2\pi x/\lambda + \varphi) \sin \omega t \tag{1.4}$$

$$V_{322} = K_{20}\ U_0\ \sin \omega t + K_{21}\ U_0\ \sin (2\pi\ x/\lambda + \varphi + \pi)\ \sin \omega t \hspace{3cm} (1.5)$$

wobei:      $\lambda$ = Teilungsperiode, äquivalent zu elektrischen Winkel $2\pi$

$K_{10}$, $K_{11}$, $K_{20}$, $K_{21} \rightarrow$ transformatorähnliche Übertragungsfaktoren

$\varphi$ Phasenversatz örtlich ist.

In der vereinfachten Annahme:

$K_{10} = K_{20}$ und $K_{11} = K_{21}$, wird die Spannung in den beiden Empfängerspulenpaaren:

$$V_0 s = V_{331} - V_{332} = 2\ K_{11}\ U_0 \sin (2\pi\ x/\lambda)\ \sin \omega t \hspace{3cm} (1.6)$$

und

$$V_0 c = V_{321} - V_{322} = 2\ K_{11}\ U_0 \sin (2\pi\ x/\lambda + \varphi)\ \sin \omega t \hspace{3cm} (1.7)$$

Da meistens $\varphi = 2K\pi + \pi/2$ (entsprechend $n\lambda + \lambda/4$ geometrischer Versatz) und mit der Konvention

$$2\pi\ x/\lambda = \alpha$$

$$2\ K_{11}\ U_0 = K$$

werden die zwei idealen Ausgangsspannungen in folgender Form dargestellt:

$$V_0 s = K \sin \alpha \sin \omega t \hspace{3cm} (1.8)$$

$$V_0 c = K \cos \alpha \sin \omega t \hspace{3cm} (1.9)$$

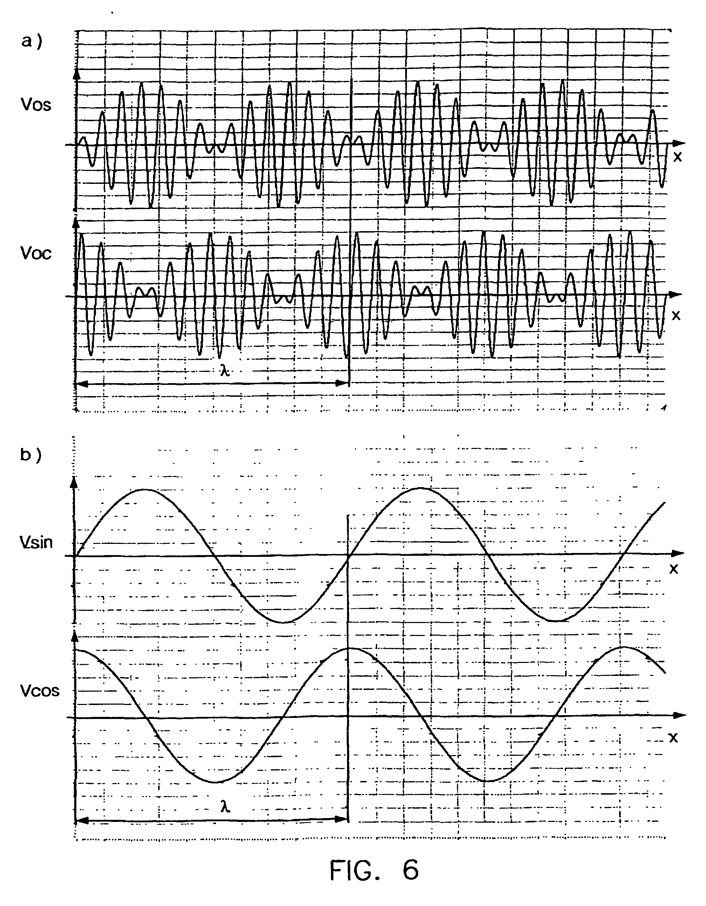

(wie im Diagram Fig. 6a)

Aus diesen zwei Signalen kann durch die Auswerteelektronik (Fig. 1.3) nach Konditionieren, Demodulieren (Fig. 6b) und eventuell Rechteckumwandeln im ratiometrischen Verfahren mit verfeinerter Auflösung (Interpolation) die genaue Lageinformation ausgegeben werden. Aus diesem Grund entsteht die Notwendigkeit, daß die Sensorstruktur zwei, durch in der Meßrichtung mit Versatz plazierten zwei Empfängergruppen, phasenverschobene Signale erzeugen muß.

Eine solche Spulenstruktur, in Verbindung mit der Maßverkörperung, kann auch in verwandter umgekehrter Weise betrieben werden indem die "Empfängerspulen" gespeist werden und das in den "Emitterspulen" induzierte Signal ausgewertet wird. In dieser Betriebsart können wiederum zwei Varianten erwähnt werden. In einer ersten Variante werden die "Sinus- und Cosinus- Empfänger" mit einem in Phase und Amplitude gleichen Signal versorgt und im "Emitterspulensystem" wird ein lageabhängiges in Amplitude moduliertes Signal induziert, oder in der zweiten Variante werden die "Sinus- und Cosinus- Empfänger" mit zwei in Amplituden gleichen und in Phase um 90° verschobenen Signalen versorgt und im "Emitterspulensystem" ein lageabhängiges in Phase moduliertes Signal erzeugt.

Alle weitere Bestimmungen gelten für alle Betriebsarten und Funktionsprinzipien und sind nur in Dimensionierung des Gerätes abhängig von den verschiedenen Ausführungen. In diesem Sinne wird weiter nur die zuerst beschriebene Ausführung als Beispiel verfolgt.

Prinzipiell sind die Auswerteverfahren im Ermessen eines Fachmannes und können von diesem in Kenntnis der Erfindung leicht adaptiert und an die jeweils vorliegenden Verhältnisse angepaßt werden. Aus dem Grund werden sie hier nicht eingehend erläutert, sondern es werden nur zusätzliche Sonderfunktionen einer Auswerteelektronik behandelt.

Die Hauptaufgabe der Erfindung ist die Bestimmung von Sensorstrukturen die mit extrem geringeren Abweichungen zu dem idealen Signalen (Gleichungen 1.8 und 1.9) Messinformationen liefern und weitgehend unabhängig von Umwelteinflüssen und Abstandsschwankungen (d) in technisch akzeptablen Toleranzen sind.

Es werden im folgenden einige mögliche Spulenanordnungen innerhalb der Sensorstrukturen analysiert, woraus ersichtlich wird, daß nur eine durch bestimmte Maßnahmen eigenkompensierte Struktur in der Lage ist, hohe Meßgenauigkeiten zu erreichen. Diese Kompensationsvarianten werden anschließend erläutert.

Zur vereinfachten Darstellung werden folgende Benennungen verwendet:

E, Ei    - Emitterspule
B, Bi    - Induktion
S+      - Sinusspulenelement 0° elektrisch
S-      - Sinusspulenelement 180° elektrisch (entspricht $\lambda/2$ geometrischer Versatz)
C+     - Cosinusspulenelement 0° elektrisch
C-     - Cosinusspulenelement 180° elektrisch

Allgemein wird für die weitere Betrachtung angenommen, daß ein Spulensystem als mehrlagiger ebener Aufbau aus einer Emitterspule (Einzelemittersystem) oder mehreren (Multiemittersystem) und zwei Empfängerkanälen besteht, wobei letztere mit ersteren induktiv gekoppelt sind, um $\pi/2$ ($\lambda/4$ geometrisch) verschobene elektrische Signale zu liefern.

Ein Empfängerkanal besteht aus mindestens einer Gruppe von zwei Spulenlementen, die um $\pi$ elektrisch ($\lambda/2$ geometrisch) verschoben und differenziell zusammengeschaltet sind, allerdings für eine gleichzeitige Abtastung von mehreren Maßstabsperioden, so daß zur Unterdrückung der einzelnen Teilungsabweichungen durch eine Mittelwertbildung und für einen höheren Signalgewinn in der Regel aus mehreren um eine ganzzahlige Periode "$n\lambda$" plazierte und in Serie geschalteten Gruppen gebildet wird. Weiter wird es oft für die vereinfachte Beschreibung ein Empfängerkanal nur mit einer einzigen Spulengruppe dargestellt.

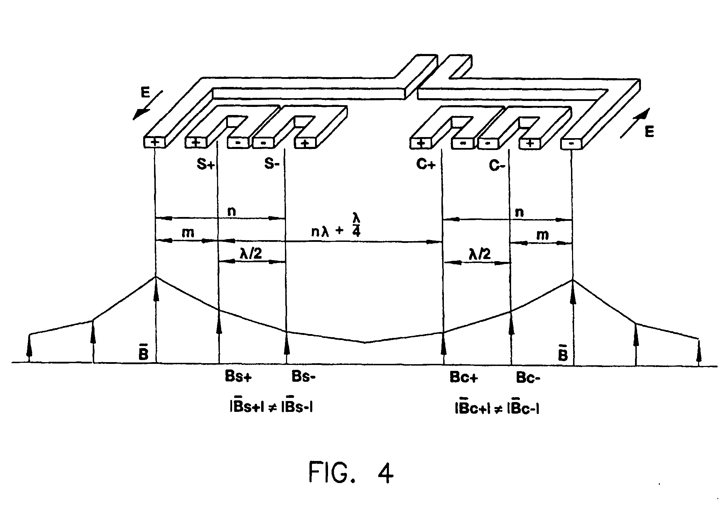

In Fig. 4 wird eine Einzelemitter-Grundstruktur erläutert, wobei die Gesamtwicklungen einer Spule als Einzelleiterbahn gezeichnet wurden. Für die Versorgung der Emitterspule mit einer Primär Wechselspannung (Gleichung 1.1) entsteht ein elektromagnetisches Feld dessen Intesitätsverlauf in der Empfängerebene (S+, S-, C+, C-) im Diagramm dargestellt wird. Es ist offensichtlich, daß durch den Feldgradient keine konstante Intensität realisierbar ist und das Feld stärker in der Nähe des Emitter-Leiterbahnbereiches ist und in Richtung Emitterspulenmitte deutlich abnimmt.

In der Annahme, daß die Empfänger der Sinus- bzw. Consinusgruppe wie in Fig. 4 positioniert sind und alle Empfängerspulenelemente die gleiche Windungszahl aufweisen, ergibt sich durch Ihren geometrischen Versatz im Emitterfeld in jeder Einzelspulenelementachse die Induktion:

$$Bs+ \neq Bs-,\ Bc+ \neq Bc-$$

die zu unterschiedlichen "Sekundärspannungen" führt. Bei einer relativen Bewegung in Meßrichtung der Spulenstruktur zu der Maßverkörperung werden diese Signale moduliert. Die Differenzbildung der induzierten Spannungen in den Spulenelementen S+, S- und C+, C- soll den unmodulierten Signalanteil (Gleichung 1.2 und 1.3) wie in den Gleichungen 1.6 und 1.7 komplett abheben.

Solange aber funktionsbedingt die Spulen zueinander in der Empfängerebene versetzt werden müssen, liefert eine derartige Spulenanordnung offsetbehaftete Signale wie in Fig. 7 dargestellt , da $K_{10}$ # $K_{20}$. In diesem Bild wird der Offset des Sinuskanales mit $\Delta$ Os und der des Cosinuskanales mit $\Delta$ Oc bezeichnet, und stellt eine Abweichung zu den idealen Signalen dar. Da durch Abstandsänderungen (Maß "d" in Fig. 3) zwischen Abtasteinheit und Maßverkörperung mit denen im Betrieb eines solchen Systems, innerhalb gewisser Toleranzen, zu rechnen ist, auch die Primärfeldverteilung beeinflußt wird, bleibt die Induktionsdifferenz (Bs+ - Bs-) und (Bc+ - Bc-) nicht konstant. Damit werden die Werte $\Delta$ Os und $\Delta$ Oc variabel sein.

Diese abstandsbedingten Offsetänderungen führen zu der Unmöglichkeit, diese in der Auswerteelektronik abgleichen zu können, wodurch es zu verhältnismäßigen Meßsystemungenauigkeiten kommt.

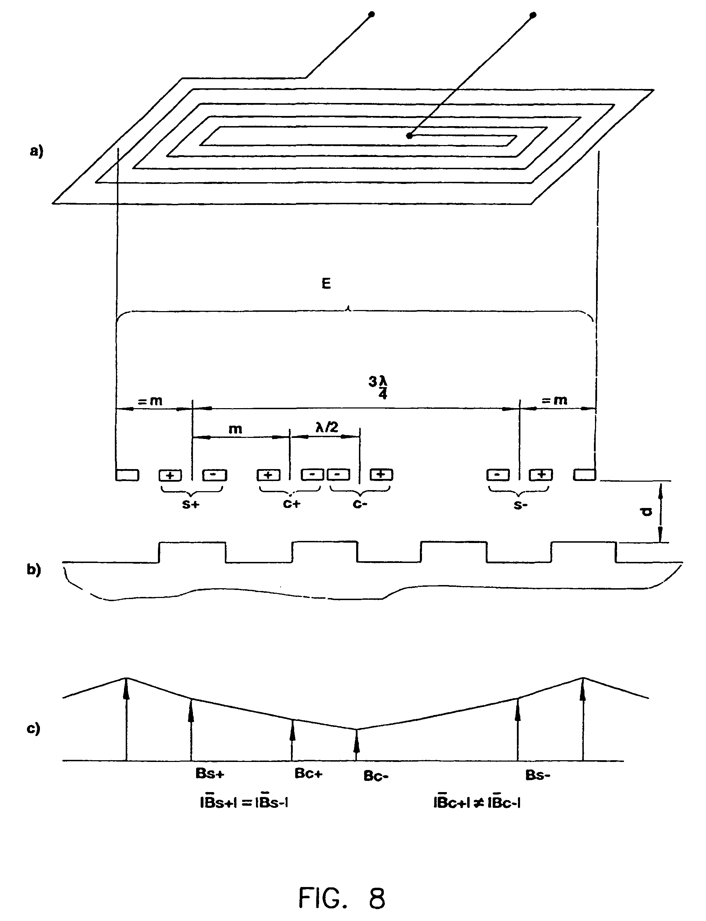

In Fig. 8 wird auch eine Einzelemittergrundstruktur dargestellt, wobei die Wicklungen der Emitterspule die ganze Sensorabtastfläche decken (Fig. 8a) und die Empfänger sich parallel zu dieser Ebene befinden. Auch in dieser Ausführung ist die Feldverteilung nicht gleichmäßig in der Empfängerebene (Diagramm Fig. 8c). Eine mögliche symmetrische Plazierung der z.B. s. Sinuselemente S+, S- zu der Emittergeometrie (Maß "m" Fig. 8b) führt zu gleichen Induktionen in deren Ebenen Bs+ = Bs- und zu einem Offset $\Delta$ Os = 0.

Damit wird das Problem aber nicht gelöst, da die Cosinusspulen funktionsbedingt zu den Sinusspulen versetzt positioniert werden müssen und dadurch nicht mehr symetrisch zum Emitter Bc+ $\neq$ Bc- sind, was zu einem Offset $\Delta$ Oc $\neq$ 0 führt.

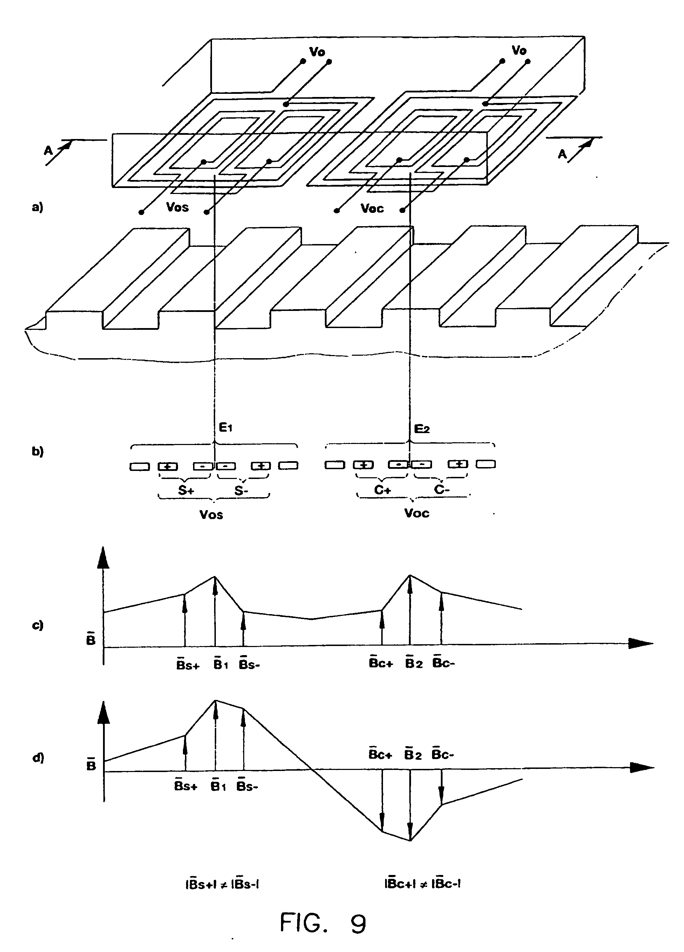

In einem weiteren Beispiel kommt eine Multiemitterstruktur in Betracht wie in Fig. 9 symbolisch dargestellt. In dieser Ausführung ist jeder Empfängerkanal von eigenen Emitterspulen angeregt. Das ganze Prinzip gilt genauso wenn ein Empfängerkanal aus mehreren Spulengruppen bestehen würde und jede Gruppe mit Ihren zwei differziellen Spulenelementen von eigenen Emitter angeregt würde oder noch erweitert jedes Einzelelement mit seinem eigenen Emitter gekoppelt würde.

In dieser Anordnung, wenn nur einer der zwei Emitter E1 oder E2 gespeist werden, würde der entsprechende Empfängerkanal durch die Symetrie und gleiche Windungszahl ein offsetfreies Signal erzeugen. Wenn aber funktionsbedingt beide Emitter aktiv sind durch die Wechselwirkungen in beiden möglichen Induktionsrichtungen (gleiche Richtung Fig. 9c, Gegenrichtung Fig. 9d) entstehen unterschiedliche Induktionen in den Elementarspulenebenen Bs+ $\neq$ Bs- und Bc+ $\neq$ Bc- und dadurch offsetbehaftete Signale. Es ist auch ersichtlich, daß jede andere Kombination auch für gemischte Spulenelemente von zwei Kanälen auf ein Emitter zu keiner Lösung führen.

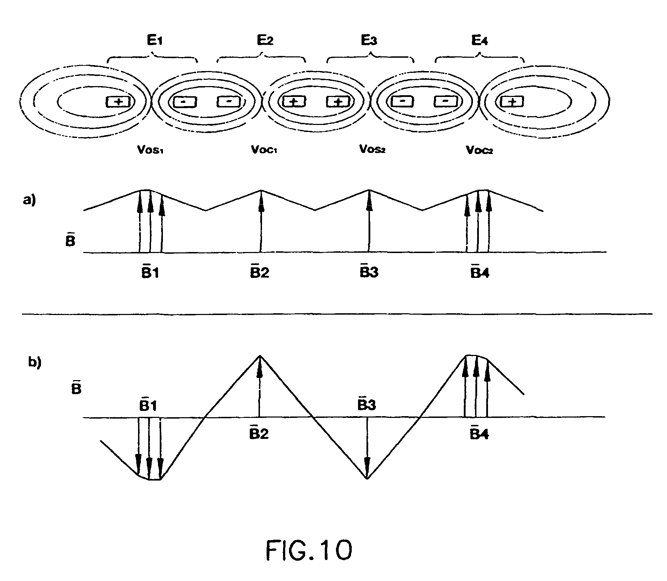

Ein erweiterte Multiemitterstruktur in einer vier-Emitterausführung ist in Fig. 10 dargestellt. Auch hier für gleiche Induktionsrichtungen (Fig. 10a) und für gegen Induktionsrichtungen (Fig. 10b) führen die Einflüsse der beiden Endemitter in der ganzen Sensorstruktur zu einer ungleichmäßigen Feldintensiätsverteilung. Dieses gilt auch für Multiemitterstrukturen mit einer großen Anzahl von Emittern.

Aus allen bisherigen Ausführungsvarianten die analysiert wurden, zieht man die Schlußfolgerung, daß nur eine durch konstruktive Maßnahmen in sich kompensierte Sensorstruktur in Verbindung mit der Maßverkörperung und Auswerteelektronik zu ausgeglichenen Ausgangssignalen führen kann (Fig. 5). Um die Bedeutung einer Kompensation zu unterstreichen, soll erwähnt werden, daß das modulierte Nutzsignal eines Spulenelementes (Gleichung 1.2) im Bereich eines Faktors -10 bis 100 kleiner ($K_{11} \ll K_{10}$) ist als das Trägersignal und daß die Differenzbildung mit dem gepaarten Element das Trägersignal sehr genau auf Nulloffset drücken muss.

Diese Kompensationsmaßnahmen betreffen die Geometrien, die Windungsanzahl und die Form und die relativen Lagen der Emitter- und Receiverspulen innerhalb der Struktur. Damit wird erreicht, daß, obwohl die einzelnen Spulenelemente mit unterschiedlichen Feldstärken angeregt werden, nach der Differenz und Summenbildung des Gesamtsignals durch zusammengeschaltete Elemente pro Messkanal ein offsetfreies Signal erzeugt wird.

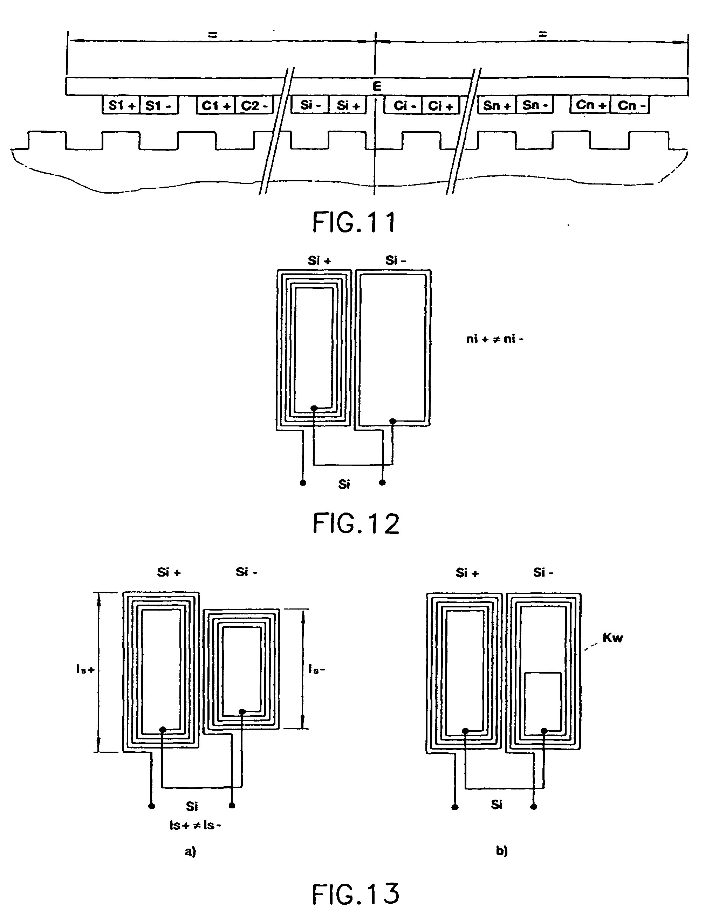

Weiter werden einige Beispiele für Kompensationsmethoden erläutert. In Fig. 11 ist eine Einzelemitterstruktur mit mehreren Empfängerelementen für die Bildung der zwei Messkanälen SINUS und COSINUS dargestellt. Durch die Zusammenschaltung der einzelnen Spulenelementen werden die zwei Meßsignale folgendermaßen gewonnen:

$$Vos = (S_{1+} - S_{1-}) + (S_{2+} - S_{2-}) + .....$$

$$........... + (Si_+ - Si_-) + ........+ (Sn_+ - Sn_-)$$

und

$$Voc = (C_{1+} - C_{1-}) + (C_{2+} - C_{2-}) + .....$$

$$........... + (Ci_+ - Ci_-) + .....+ (Cn_+ - Cn_-)$$

Wie bereits erklärt, ist das Erregerfeld in der Empfängerebene nicht gleich stark. Um dieser Ungleichmäßigkeit entgegen zu wirken, können, wie in Fig. 12 dargestellt, die einzelnen Spulenelemente (in dem Fall Si+ und Si-) unterschiedliche Windungsanzahl aufweisen ni+ $\neq$ ni-. Das Verhältnis ni+ / ni- ist umgekehrt proportional zu dem für diese Spulenelemente entsprechenden Induktionsverhältnis Bi+/Bi-, sodaß für diese beiden Spulen, in Abwesenheit der Maßverkörperung, die ja lagebedingt diese Ströme beeinflußt, gleiche Spannungen (im Betrag) induziert werden..

In der Spulenstruktur kann rechnerisch bis zu einem beliebigen Genauigkeitsgrad diese Methode für die Spulenelementenpaare $S_{1+}$, $S_{1-}$, und $C_{1+}$, $C_{1-}$, bis zu Cn+, Sn- und Cn+, Cn- eingesetzt werden, wobei sich durch Symmetrie $n_{1+}/n_{1-} = n_{n+}/n_{n-}$ für das erste und letzte Paar ergibt, und sich dies analog bis zur Emittersymmetrieachse fortsetzt. Offensichtlich ist die Differenz $\Delta l > \Delta i$ mit $\Delta l = |n_{1+} - n_{1-}|$ und $\Delta i = |n_{i-} - n_{i+}|$ und nimmt Richtung Strukturachse von beiden Seiten kontinuierlich ab.

Eine äquivalente Kompensationsmethode für die in Fig. 11 dargestellte Einzelemitterstruktur ist die Anpassung der Empfängerspulenfläche (Fig. 13a) umgekehrt proportional zur Erregerfeldstärke, so daß für unterschiedliche $B_{i+} \neq B_{1-}$ durch unterschiedliche Empfangsflächen Ai+ $\neq$ Ai- gleiche Magnetfeldflüsse für die zwei differenziellen Elemente eines Spulenpaares erreicht werden. Eine Änderung der Spulenabmessung "1" senkrecht zu Meßrichtung beeinflusst das in dieser Spule induzierte Signal nur quantitativ und macht diese erwähnte Anpassung möglich. Eine noch feinere Flussanpassung kann auch nur durch die geometrische Änderung einer oder einigen Windungen einer Spule erreicht werden (siehe Fig. 13b).

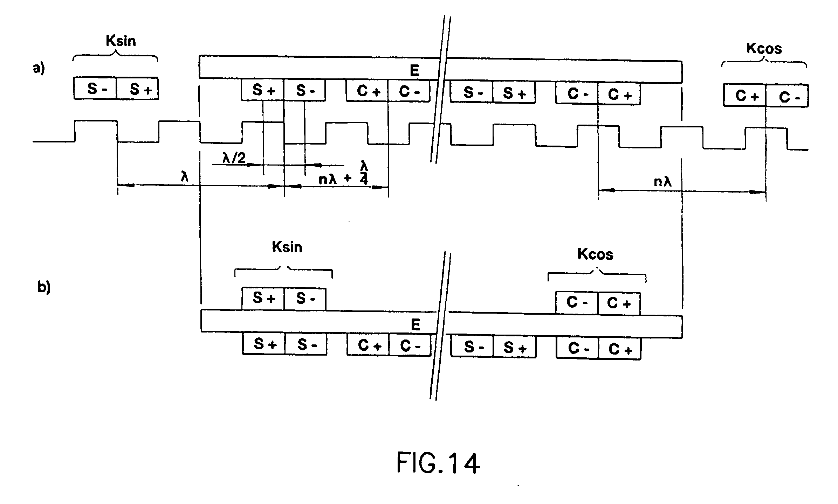

Eine dritte Kompensationsmethode einer Einzelemitterstruktur ist in Fig. 14 dargestellt. Da handelt es sich um zusätzliche Empfängerelemente wie ksin und kcos, plaziert außerhalb(Fig. 14a) oder innerhalb (Fig. 14b) der Emitterfläche in Meßrichtung, die durch die in ihnen induzierten Signale den entsprechenden inneren Empfängerelementen entgegenwirken, sodaß die Zusammenschaltung pro Kanal zu einem ausgeglichenen, offsetfreien Signal führt. Dabei können alle bisher beschriebenen Kompensationsmethoden wie Anpassung der Windungsanzahl und Empfängerfläche eingesetzt werden.

Wie man in der Darstellung (14a) beobachten kann, sind die Kompensationsspulen ksin und kcos um 180° elektrisch versetzt, da die Induktionsrichtung ausserhalb der Emitterspule als Vektor auch entgegenwirkt.

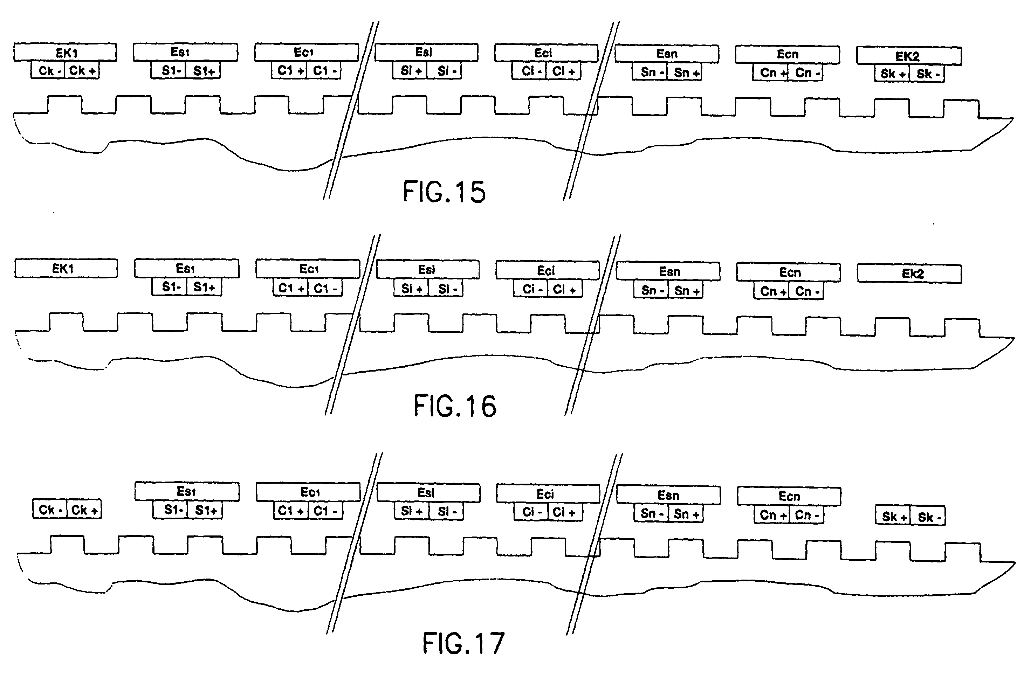

In der Fig. 15 ist eine Multiemitterstruktur dargestellt. Durch die Verkettung der einzelnen Emitterfelder entsteht, wie bereits erwähnt, eine ungleiche Gesamtfeldverteilung. Eine erste hier vorgestellte Kompensationsmethode sieht zusätzliche Kompensationsemitter EK1 und EK2 gekoppelt mit den Kompensationsempfänger ($C_{K+}$, $C_{K-}$ und $S_{K+}$, $S_{K-}$) vor. Diese können sich von den anderen analogen Emittern und Empfängern durch ihre Fläche und (oder) Windungzahl eventuell auch Windungsrichtung unterscheiden. Diese Unterschiede führen dazu, daß in der Gesamtstruktur, mit zusammengeschalteten Elementen, durch die Entgegenwirkung dieser Kompensationssignale ihre Abweichungen unterdrückt werden.

In zwei in vereinfachter Form weiter dargestellten Varianten dieser Anordnung werden als Kompensationselemente entweder nur zusätzliche Emitter (Fig. 16) oder zusätzliche Empfänger (Fig. 17) verwendet. In einer ähnlichen Weise wie oben beschrieben werden die ohne diese Kompensationselemente vorhandenen Signaloffsetwerte kompensiert.

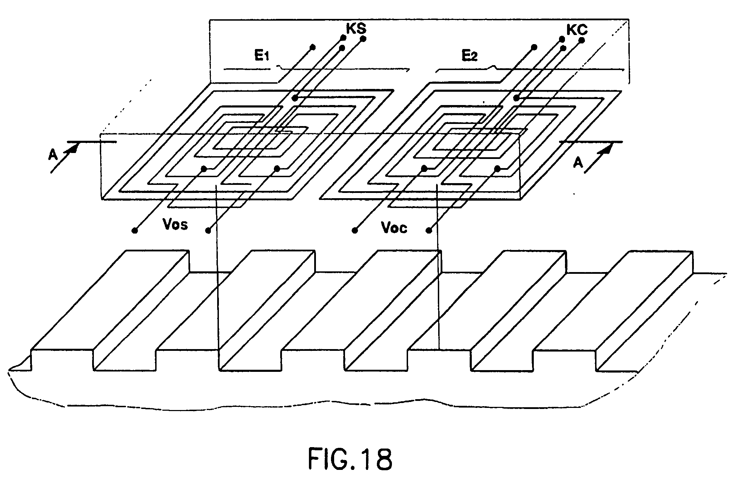

In den Fig. 18 (axonometrische Darstellung) und Fig. 19 (Strukturquerschnitt und Induktionsbetrachtungen) wird eine andere Kompensationsmethode dargestellt, die für beide Einzelemitterstrukturen und Multiemitterstrukturen eingesetzt werden kann. In dieser Ausführung hat die Struktur in einer zu den anderen Spulenelementen parallel zu deren Ebenen angeordnete Kompensationsspulen KS und KC. Durch die entsprechende Versorgung, Geometrie und Lage dieser Kompensationsspulen können zusätzliche Induktionen ($\bar{B}$ks+, $\bar{B}$ks- und $\bar{B}$kc+, $\bar{B}$kc-) in der Empfängerebene erzeugt werden, die entgegen der Abweichungen der Standardemitter $\Delta s = (\bar{B}s+ - \bar{B}s-)$ und $\Delta c = (\bar{B}c+ - \bar{B}s-)$ wirken und nach der Überlagerung deren Effekte zu einem gleichmäßigen totalen Erregerfeld führt: $(\bar{B}_Ts+) = (\bar{B}_Ts-)$ und $(\bar{B}_Tc+) = (\bar{B}_Tc-)$. Dabei gilt: $(\bar{B}s+) + (\bar{B}ks+) = (\bar{B}s-) + (\bar{B}ks-) = = (\bar{B}_Ts+) = (\bar{B}_Ts-)$ und : $(\bar{B}c+) + (\bar{B}kc+) = (\bar{B}c-) + (\bar{B}kc-) = (\bar{B}_Tc+) = (\bar{B}_Tc-)$

(siehe Vektordiagramm 19a und 19b)

In Fig. 19a wird die Ausführung zweier Emitter gleicher Induktionsrichtung und in Fig. 19b zweier Emitter mit gegeneinander gerichteter Induktionsrichtung dargestellt. In beiden Fällen werden zuerst die Standard-Emitterinduktionen B mit Ihren Lageabweichungen, dann die Kompensationsinduktionen Bk und die gesamtkompensierte Induktion $B_T$ dargestellt.

Für all diese bisher beschriebene Strukturen wurden Lösungen für die Signaloffsetunterdrückung vorgestellt.

Die erzeugten Signale müssen aber für ein hochauflösendes Messsystem auch eine gute "Sinusförmigkeit" aufweisen, das bedeutet daß die lageabhängigen Oberwellen (auch Klirrfaktor genannt) auf ein Minimum reduziert werden müssen. Man kann theoretisch berechnen, daß für die bisherigen Idealstrukturen die induzierten Signale je nach Betriebsart und Geometrien, überlagert auf die örtliche Hauptsinusschwingung in unterschiedlichen Anteilen mit geraden und ungeraden Oberwellen behaftet sind.

Diese Oberwellen könnten, falls sie im konstanten Verhältnis zur Hauptwelle stehen, durch aufwendige elektronische Auswertung unterdrückt werden (wie z.B. eine punktuelle "Look-up table" Korrektur). Da aber dieses Verhältnis vom Abstand "d" (Fig.3) abhängig ist, lassen sie sich kaum für den gesamten Funktionsbereich eliminieren, was jedoch für hohe Genauigkeiten notwendig ist. Daraus ersieht man, daß auch oberwellenmäßig nur eine in sich kompensierte Struktur zu den gewünschten Anforderungen führen kann.

Es läßt sich berechnen, das die Messsystemübertragungsfunktion durch bestimmte geometrische Maßnahmen beeinflusst werden kann. Diese Maßnahmen werden weiter als Korrekturen zu einer theoretisch idealen Struktur erläutert. Für eine solche korrigierte Struktur kann gezielt jede störende Oberwellenordnung mit einer der im folgenden näher erläuterten Maßnahmen unterdrückt werden. Grundsätzlich können zur Unterdrückung mehrerer Oberwellenordnungen durch Überlagerung der Effekte mehrere Korrekturmaßnahmen für die selbe Struktur eingesetzt werden.

Eine erste vorgestellte Korrekturart betrifft die Emitterspulengeometrie. Von einem Emitter, wie er in Fig. 20a dargestellt ist, mit Idealmaß durch den Additions -oder Subtraktionswert "k" in der Emitterbreite in Messrichtung, kann, um eine bestimmte Oberwellenordnung zu unterdrücken, die induzierte Signalform in den Empfängern S+ und S- beeinflusst werden. Ebenso kann durch die Verteilung der einzelnen Wicklungen in der Emitterebene in Abweichung von der regelmäßigen Distribution (Fig 21a), so, wie in Fig. 21b und 22c dargestellt, Signaleinflüsse erzielt werden.

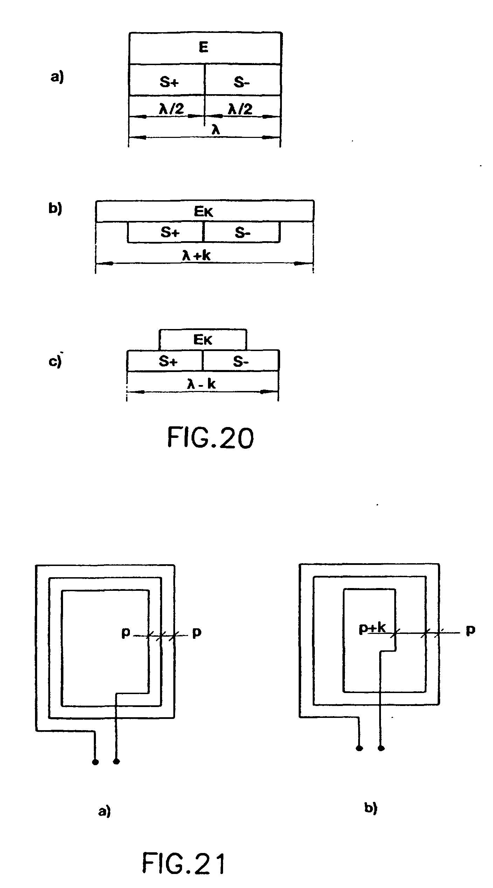

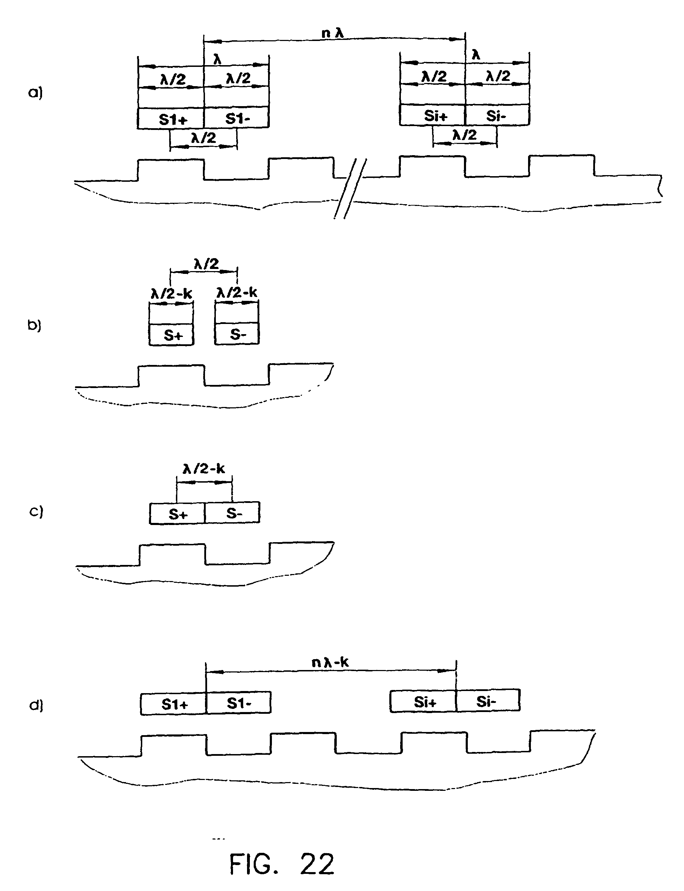

Eine zweite Korrekturart betrifft die Empfängergeometrie und die Empfängerlage in Messrichtung. In Fig.22a wird die Ideal - Empfängerebene vereinfacht für einen einzelnen Messkanal (Sinus), bestehend aus mehreren Empfängergruppen mit Bemaßung dargestellt. Durch eine Korrektur "k" geänderte Spulenelementbreite (Fig.22b) oder Spulenelementen - Abstand in einer Empfänger - Differentialgruppe (Fig.22c) oder durch die Abstände der Empfängergruppen in der Empfängerreihe (Fig.22d), sowie durch die Einzelwicklungsverteilung eines Empfängerspulenelementes (Fig.21b) können verschiedene Oberwellen unterdrückt werden.

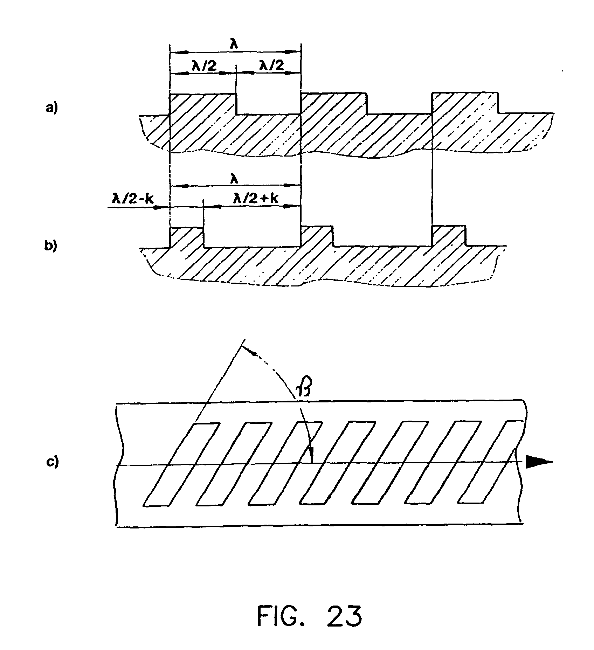

Eine dritte Korrekturart betrifft die Maßverkörperung. Das Verhältnis zwischen den Bereichen mit höherer elektrischen Leitfähigkeit oder geringere Reluktanz (Maß "a" in Fig. 3) und den Bereichen mit niedrigerer Leitfähigkeit oder höherer Reluktanz (Maß "b" in Fig. 3) im Rahmen einer Teilungsperiode λ, kann auch die Signalform beeinflussen. Für einen bestimmten Korrekturwert "k" (Fig.23b) kann eine bestimmte Oberwellenordnung durch den Maßstab eliminiert werden. Die Unterdrückung einer Oberwellenordnung kann in der Maßverkörperung durchgeführt werden, indem die Grenzbereiche w.o. beschrieben im Rahmen der Teilungsperiode einen bestimmten Winkel $\alpha \neq 90°$ zur Messrichtung aufweisen (Fig.23c).

Die Ermittlung all dieser Oberwellenkorrekturwerte für ein definiertes Messsystem mit seiner bestimmten Übertragungsfunktion nach der Festlegung der Funktionsart und der idealen Geometrie, Spulenstruktur, Maßstab und Genauigkeitsanforderungen liegt in Kenntnis der Erfindung im Ermessen eines Fachmannes.

Ein zusätzlicher Aspekt in Betrachtung des Messsystemes ist die Abhängigkeit der Signalamplituden mit dem Abstand "d" der Spulenstruktur zum Maßstab (Fig.3). Obwohl, wie bereits erwähnt, die Auswerteelektronik ein ratiometrisches Verfahren für die Ermittlung des elektrischen Winkels α verwendet, sodaß die Signalamplituden der zwei Meßkanälen weitgehend nicht direkt im Ergebnis zu finden sind, sondern nur ihr Verhältnis, können für die Erweiterung des Funktionsbereiches durch eine weiter unten beschriebene Methode diese Amplituden annähernd konstant gehalten werden.

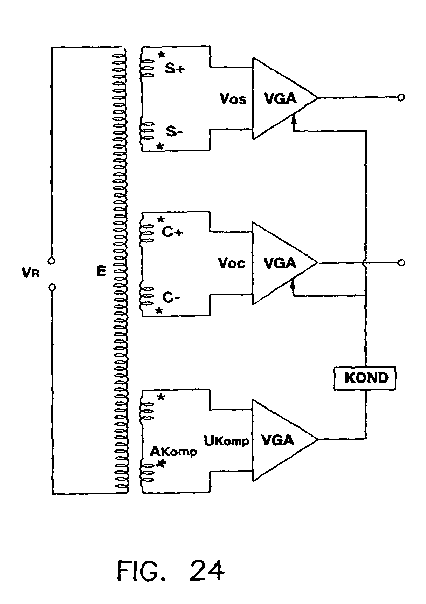

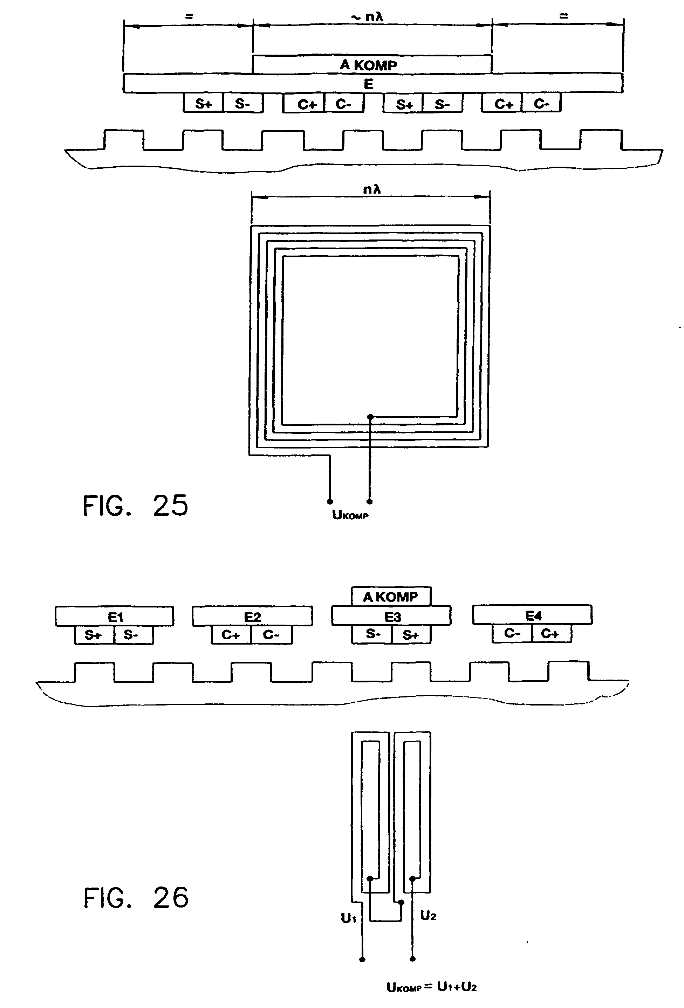

In Fig.24 ist ein Blockdiagramm dargestellt, mit dem die Messsignale Vos und Voc durch Operationsverstärker in der Eingangsstufe der Auswerteelektronik mit variablen Verstärkungsfaktoren bearbeitet werden. Der Verstärkungsfaktor wird bestimmt von dem U komp-Signal nach Konditionierung und ist proportional zu dem Abtastabstand zwischen Maßverkörperung und Spulenstruktur. Das U komp - Signal wird gewonnen von einer zusätzlichen Spule A komp (Fig. 25, Fig.26) die sich in einer Parallelebene zur Emitterspule in der Gesamtspulenstruktur befindet und durch ihre Geometrie ein abstandsabhängiges Signal liefert (Maß der magnetischen Kopplung zwischen Emitter E und A komp), das exponentiell vom Abstand "d" beeinflusst wird. Die Spule A komp ist so gestaltet, daß ihr induziertes Signal U komp nicht durch Bewegung in Messrichtung moduliert wird (z.B. eine Breite von ~ nλ wie in Fig.25). Da das U komp - Signal so wie Vos und Voc mit größerem Abstand "d" abnehmen, jedoch der Verstärkungsfaktor größer sein muss, soll dieses Signal vor dem Anschluß an den VGA's entsprechend konditioniert werden.

Alle bisher erwähnten Kompensations - und Korrekturmethoden wurden aus Gründen der Vereinfachung nur für eine Spulenebene dargestellt und einheitlich als "Spule" bezeichnet. Diese gelten aber in analog auch dann, wenn eine Spule aus mehreren übereinander positionierten und zusammengeschalteten Spulenschichten besteht.

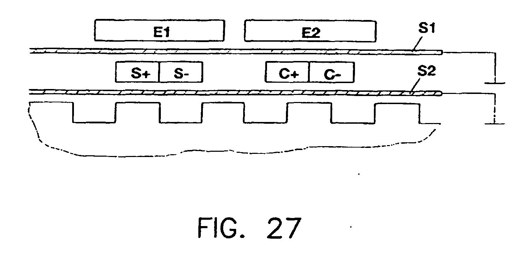

In der konstruktiven Umsetzung für die Herstellung einer mehrlagigen Spulenstruktur können durch die Übereinanderplazierung der einzelnen Spulenebenen, je nach Betriebsfrequenzen und Impedanzen zusätzlich zu den magnetischen Kopplungen unerwünschte kapazitive Kopplungen entstehen. Um diese zu vermeiden und auch die gesamte Struktur von äusseren Einflüssen abzuschirmen, können zwischen den aktiven Spulenebenen und/oder ausserhalb großflächige metallische Dünnschichtebenen (Fig.27/S1 und S2) vorgesehen werden. Durch deren Anschluss an ein festes Potential wird die Struktur kapazitiv entkoppelt.

Als konstruktives Beispiel sei folgendes besprochen:

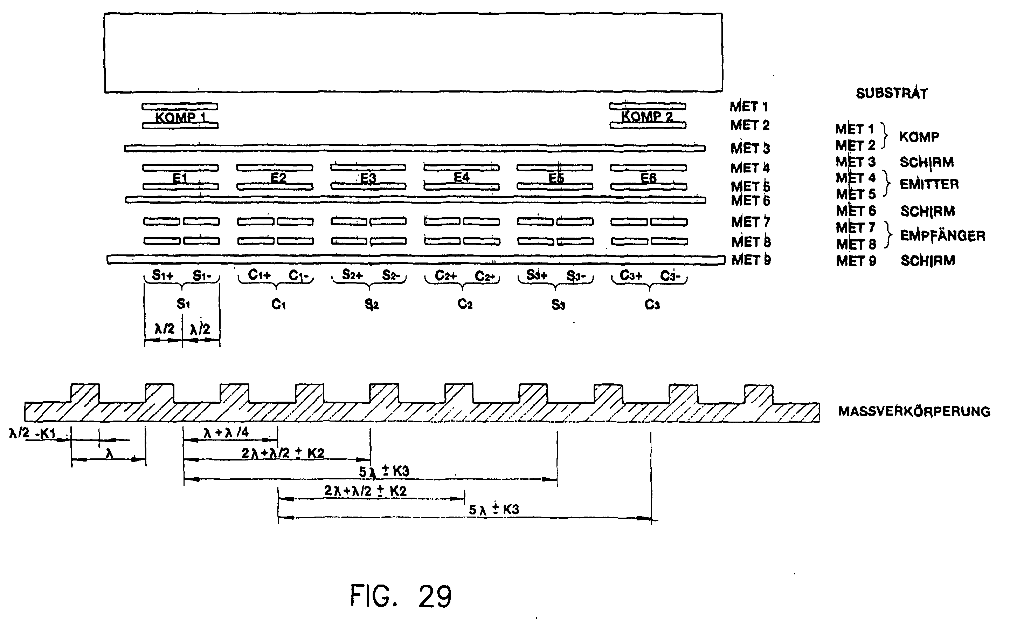

Anhand einer elementaren Spule, wie in Fig. 28 dargestellt, wird im folgenden eine konstruktive Ausführung als Beispiel für die komplette Spulenstruktur, wie sie in Fig. 29 dargestellt ist, beschrieben, wobei nur einige der bisher erläuterten Kompensationsmethoden eingesetzt werden. Je nach Systemdimensionierung und Anforderungen können beliebig andere von den für jeden Signalparameter angegebene Korrekturprinzipien in einem gemeinsam gebildeten Konzept angewandt werden.

Für die weitere Betrachtung wird angenommen, dass die Spulenstruktur aus abwechselnden Metall (MET) und Isolationsschichten (ISO) besteht. Die Isolationsschichten weisen Durchkontaktierungen (Vias) auf, die die elektrischen Zwischenschichtanschlüsse realisieren. Diese gesamte Multilayeranordnung wird auf ein, aus technologischer Sicht bestimmtes Substrat aufgebaut und über entsprechende Kontakte mit der Versorgungseinheit und der Auswerteelektronik verbunden. Eine derartige Multilayeranordnung kann durch bekannte Technologien ähnlich wie bei gedruckten Schaltungen oder in photolithographischer Dünnschichttechnik realisiert werden.

Das Spulenelement in Fig. 28 kann, wenn fünktionell notwendig, in ähnlicher Weise auch in mehr als zwei Metallebenen gebildet werden. Die Maßverkörperung besteht aus einer Metallfolie, entweder aus Eisen oder Eisenlegierung, magnetisch oder weichmagnetisch oder aus Nichteisenlegierung mit angeätzter periodischer Struktur (Teilung) oder, was wegen der erreichbaren höheren Teilungsgenauigkeit bevorzugt wird, aus einer doppelseitig in Koinzidenz photolithographisch geätzten Folie, die auf einen metallischen oder nichtmetallischen Untergrund aufgebracht wird.

Die in Fig. 29 dargestellte Multi-Emitterspulenstruktur mit den angegebenen geometrischen Verhältnissen besteht im konkreten Fall (ohne die Praxis darauf zu beschränken) aus sechs Emittoren ($E_1$ bis $E_6$) überlagert auf jeweils drei "Sinus" und "Cosinus" Empfängergruppen ($S_1$, $S_2$, $S_3$ und $C_1$, $C_2$, $C_3$) mit denen diese dadurch induktiv gekoppelt sind. Mit den Emittoren $E_1$ und $E_6$ sind die Abstandskompensationsspulen KOMP induktiv gekoppelt.

Zwischen den Spulenebenen können zur kapazitiven Entkopplung Schirmflächen vorgesehen werden.

Die Emittoren werden, entweder alle in Serie oder parallel zusammengeschaltet und mit Wechselspannung gespeist. Es besteht auch die Möglichkeit diese nur zum Teil auf oben angeführte Weise zusammen zuschalten. In diesem Fall werden die restlichen Emittoren, in Phase mit den anderen aber getrennt versorgt. Dadurch können diese zur Erreichung einer gewünschten Gleichmäßigkeit des Erregerfeldes mit unterschiedlichen Spannungen (bzw. Strömen) gespeist werden.

Diese Emittoren (z.Bsp. $E_1$ und $E_6$) werden als Kompensationsemitter betrachtet. Die Windungsanzahl der Emittoren kann entweder identisch für alle oder aber unterschiedlich, symmetrisch zur Strukturachse in Meßrichtung, für den Ausgleich der Emittereinzelfeld-Wechselwirkungen, realisiert werden.

Eine Empfängergruppe (z.B. $S_1$) besteht aus zwei Empfängerelementen ($S_{1+}$ und $S_{1-}$), welche differentiell geschaltet sind. Jeder der beiden Meßkanäle "Sinus" und "Cosinus" wird durch die Serienschaltung der entsprechenden Gruppen gebildet.

Wenn nicht durch die Emitterbeschaffenheit kompensiert, können zusätzlich zu dieser ersten Maßnahme, für die Erreichung eines gesamten offsetreduzierten Signals, wie bereits weiter oben erläutert, die Empfängerelemente mit unterschiedlichen Windungsanzahlen oder Geometrien für den Ausgleich des Emitterfeldgradientes, gestaltet werden.

Die idealen Abstände zwischen den Empfängerspulengruppen eines Kanals (siehe Fig. 29) können durch Korrekturwerte ($K_2$, $K_3$), ermittelt aus der berechneten Übertragungsfunktion, für die Unterdrückung bestimmter Oberwellen angepasst werden.

Das Abstandskompensationssignal, induziert in den KOMP 1 und KOMP 2 Spulen (in Serie geschaltet), hat eine Amplitude, die umgekehrt proportional zum Abstand der Spulenstruktur von der Maßverkörperung ist. Diese soll nicht oder nur geringfügig von deren relativen Bewegung in Meßrichtung beeinflußt werden (Ripple-Erscheinung). Das wird erreicht durch die Anpassung der Kompensationsspulenbreite, korrigiert von dem Idealwert (Periodenganzzahl).

Eine weitere störende Ausgangssignaloberwelle kann in der Maßverkörperung durch die Korrektur $K_1$ unterdrückt werden.

Zur Systemvereinfachung können selbstverständlich für die Realisierung der Spulenstruktur je nach Genauigkeitsanforderungen auch wenige Metalllayer verwendet werden.

Der Vollständigkeit halber sei noch auf eine rotative Ausführungsform verwiesen:

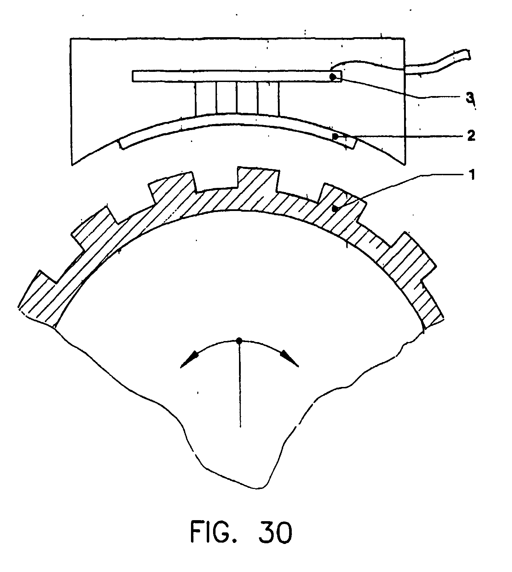

Die gesamten Bestimmungen für das Längenmesssystem können identisch für eine Winkelmesserfassung eingesetzt werden. Der einzige Unterschied besteht darin, dass die Maßverkörperung einen zylindrischen Teil darstellt (Nr. 1 in Fig. 30) und die Spulenstruktur bogenförmig oder als mit der Maßverkörperung konzentrische Polygonalfläche realisiert wird (Nr. 2 in Fig. 30).

Da derartige Messsysteme, schon im Stand der Technik mit entsprechenden Computerprogrammen entwickelt und ausgelegt werden, besteht für den Fachmann in Kenntnis der Erfindung die Möglichkeit, die jeweils benutzten Computerprogramme mit Moduln bzw. Routinen auszustatten, die die erfindungsgemäßen Korrekturen vornehmen. Dabei kann durchaus ein iterativer Weg eingeschlagen werden, bei dem beispielsweise erfindungsgemäße Korrekturen in vorbestimmten Ausmaß vorgenommen werden, die dadurch erreichte Verbesserung überprüft und die noch notwendige Korrektur (der Korrektur) vorgenommen wird, bis die erhaltenen Ergebnisse im Rahmen der angestrebten Resultate liegen. Es kann selbstverständlich in Kenntnis der Erfindung auch eine Analyse der notwendigen Korrektur vorgenommen werden, um schon im ersten Schritt zum gewünschten Resultat zu kommen.

**Patentansprüche**

1. Induktive Messeinrichtung zur Positionserfassung mit einer Spulenstruktur (2) und einer Maßverkörperung (1), die mindestens eine Teilung in Bereiche unterschiedlicher Reluktanz oder Leitfähigkeit aufweist, wobei die Spulenstruktur (2) zumindest eine Emitterspule (E) zur Erzeugung eines Magnetfeldes und zumindest zwei Empfängerspulenpaare (Si+/Si-, Ci+/Ci-) umfasst, wobei jedes Paar zwei differenziell zueinander geschaltete Empfängerelemente zur Erfassung eines Magnetfeldes aufweist, wobei die Emitterspule (E) mit den Empfängerelementen (Si+/Si-, Ci+/Ci-) in Abhängigkeit der relativen Lage der Spulenstruktur (2) zur Maßverkörperung (1) induktiv gekoppelt ist, **dadurch gekennzeichnet, dass** die Spulenstruktur (2) zumindest ein Kompensationselement zur Flussanpassung aufweist, wobei das Kompensationselement zumindest eine zusätzliche Kompensationsemitterspule (EK1, EK2, KS, KC) zur Erzeugung eines Kompensationsfeldes umfasst.

2. Induktive Messeinrichtung nach Anspruch 1, **dadurch gekennzeichnet, dass** die Kompensationsemitterspule (EK1, EK2, KS, KC) unabhängig von der Emitterspule (E) versorgt wird.

3. Induktive Messeinrichtung zur Positionserfassung mit einer Spulenstruktur (2) und einer Maßverkörperung (1), die mindestens eine Teilung in Bereiche unterschiedlicher Reluktanz oder Leitfähigkeit aufweist, wobei die Spulenstruktur (2) zumindest eine Emitterspule (E) zur Erzeugung eines Magnetfeldes und zumindest zwei Empfängerspulenpaare (Si+/Si-, Ci+/Ci-) umfasst, wobei jedes Paar zwei differenziell zueinander geschaltete Empfängerelemente zur Erfassung eines Magnetfeldes aufweist, wobei die Emitterspule (E) mit den Empfängerelementen (Si+/Si-, Ci+/Ci-) in Abhängigkeit der relativen Lage der Spulenstruktur (2) zur Maßverkörperung (1) induktiv gekoppelt ist, **dadurch gekennzeichnet, dass** die Spulenstruktur (2) zumindest ein Kompensationselement zur Flussanpassung aufweist, wobei das Kompensationselement zur Flussanpassung unterschiedliche Geometrien der differentiell zueinander geschalteten Empfängerelemente (Si+/Si-, Ci+/Ci-) umfasst.

4. Induktive Messeinrichtung nach Anspruch 3, **dadurch gekennzeichnet, dass** die Empfangsflächen (Ai+, Ai-) differentiell zusammengeschalteter Empfängerelemente (Si+/Si-, Ci+/Ci-) umgekehrt proportional zum entsprechenden Induktionsverhältnis Bi+/Bi- in den Empfängerelementen sind.

5. Induktive Messeinrichtung nach Anspruch 3, **dadurch gekennzeichnet, dass** das Verhältnis der Windungsanzahlen ni+/ni- differentiell zusammengeschalteter Empfängerelemente (Si+/Si-, Ci+/Ci-) umgekehrt proportional zum entsprechenden Induktionsverhältnis Bi+/Bi- in den Empfängerelementen sind.

6. Induktive Messeinrichtung nach Anspruch 3, **dadurch gekennzeichnet, dass** die Empfängerspulen (Si+/Si-, Ci+/Ci-) entsprechend der Emitterfeldverteilung in Messrichtung zumindest für einen Teil ihrer Windungen unterschiedliche Längen (ls+, ls-) quer zur Messrichtung aufweisen.

7. Induktive Messeinrichtung zur Positionserfassung mit einer Spulenstruktur (2) und einer Maßverkörperung (1), die mindestens eine Teilung in Bereiche unterschiedlicher Reluktanz oder Leitfähigkeit aufweist, wobei die Spulenstruktur (2) zumindest eine Emitterspule (E) zur Erzeugung eines Magnetfeldes und zumindest zwei Empfängerspulenpaare (Si+/Si-, Ci+/Ci-) umfasst, wobei jedes Paar zwei differenziell zueinander geschaltete Empfängerelemente zur Erfassung eines Magnetfeldes aufweist, wobei die Emitterspule (E) mit den Empfängerelementen (Si+/Si-, Ci+/Ci-) in Abhängigkeit der relativen Lage der Spulenstruktur (2) zur Maßverkörperung (1) induktiv gekoppelt ist, **dadurch gekennzeichnet, dass** die Spulenstruktur (2) zumindest ein Kompensationselement zur Flussanpassung aufweist, wobei das Kompensationselement zumindest ein zusätzliches mit einem Empfängerelement (Si+/Si-, Ci+/Ci-) zusammengeschaltetes Kompensationsempfängerelement (Sk+/Sk-, Ck+/Ck-; Ksin, Kcos) umfasst.

8. Induktive Messeinrichtung nach Anspruch 7, **dadurch gekennzeichnet, dass** das Kompensationsempfängerelement (Sk+/Sk-, Ck+/Ck-; Ksin, Kcos) außerhalb der Emitterfläche (E) platziert ist.

9. Induktive Messeinrichtung nach Anspruch 7, **dadurch gekennzeichnet, dass** das Kompensationsempfängerelement (Sk+/Sk-, Ck+/Ck-; Ksin, Kcos) innerhalb der Emitterfläche (E) platziert ist.

10. Induktive Messeinrichtung nach einem der Ansprüche 1 bis 9, **dadurch gekennzeichnet, dass** die Sensorstrukturen weitgehend unabhängig von Umwelteinflüssen und Abstandsschwankungen (d) in technisch akzeptablen Toleranzen sind.

11. Induktive Messeinrichtung nach einem der vorangehenden Ansprüche, **dadurch gekennzeichnet, dass** die Spulenstruktur (2) in einer Multilayeranordnung realisiert ist.

12. Induktive Messeinrichtung nach Anspruch 11, **dadurch gekennzeichnet, dass** zwischen und/oder außerhalb der Spulenstrukturebenen für die Abschirmung und/oder die kapazitive Entkopplung großflächige Metallschichten vorgesehen sind, die elektrisch an einem festen Potential angeschlossen sind.

13. Induktive Messeinrichtung nach einem der voranstehenden Ansprüche, **dadurch gekennzeichnet, daß** für die Unterdrückung der Oberwellen im Ausgangssignal die Emitterbreite nλ+/-k beträgt, wobei gilt: n ist eine natürliche Zahl, λ ist die Teilungsperiode und k ist ein Korrekturwert.

14. Messeinrichtung nach einem der voranstehenden Ansprüche, **dadurch gekennzeichnet, daß** für die Unterdrückung der Oberwellen im Ausgangssignal in der Emitterebene die Wicklungsaufteilung der Emitter (E) nicht periodisch gleichmäßig ist.

15. Messeinrichtung nach einem der voranstehenden Ansprüche, **dadurch gekennzeichnet, daß** für die Unterdrückung der Oberwellen im Ausgangssignal die Empfängerelemente (Si+/Si-, Ci+/Ci-) eine Breite von $\lambda/2 \pm k$ aufweisen, wobei gilt: λ ist die Teilungsperiode und k ein Korrekturwert.

**16.** Messeinrichtung nach einem der voranstehenden Ansprüche, **dadurch gekennzeichnet, daß** für die Unterdrükkung der Oberwellen des Ausgangssignals die Empfängerelemente (Si+/Si-, Ci+/Ci-) im Rahmen eines Empfängerdifferentialpaares in Messrichtung einen Abstand zueinander von λ/2 +/- k aufweisen, wobei gilt: λ ist die Teilungsperiode und k ein Korrekturwert.

**Claims**

**1.** Inductive measurement system to determine positions, with a coil structure (2) and a material measure (1), which has at least one scale divided into ranges of varying reluctance or conductivity, with the coil structure (2) covering at least one emitter coil (E) for generating a magnetic field and at least two pairs of receiver coils (Si+ / Si-, Ci+ / Ci-), with each pair having two receiver elements differentially wired up to one another to detect a magnetic field, with the emitter coil (E) being inductively coupled with the receiver elements (Si+ / Si-, Ci+ / Ci-), depending on the relative position of the coil structure (2) in relation to the material measure (1), distinguished by the fact that the coil structure (2) has at least one compensation element for flow matching, and with the compensation element covering at least one additional compensation emitter coil (EK1, EK2, KS, KC) for generating a compensation field.

**2.** Inductive measurement system as Paragraph 1, distinguished by the fact that the compensation emitter coil (EK1, EK2, KS, KC) is powered independently of the emitter coil (E).

**3.** Inductive measurement system to determine positions with a coil structure (2) and a material measure (1), which has at least one scale divided into ranges of varying reluctance or conductivity, with the coil structure (2) covering at least one emitter coil (E) for generating a magnetic field and at least two pairs of receiver coils (Si+ / Si-, Ci+ / Ci-), with each pair having two receiver elements, wired up differentially to one another, for detecting a magnetic field, and with the emitter coil (E) being inductively coupled with the receiver elements (Si+ / Si-, Ci+ / Ci-), depending on the relative position of the coil structure (2) in relation to the material measure (1), distinguished by the fact that the coil structure (2) has at least one compensation element for flow matching, and with the compensation element for flow matching covering varying geometries of the receiver elements wired up differentially to one another (Si+ / Si-, Ci+ / Ci-).

**4.** Inductive measurement system as Paragraph 3, distinguished by the fact that the receiving surfaces (Ai+, Ai-) of the receiver elements differentially wired up (Si+ / Si-, Ci+ / Ci-) are inversely proportional to the corresponding induction ratio Bi+ / Bi- in the receiver elements.

**5.** Inductive measurement system as Paragraph 3, distinguished by the fact that the ratio of the numbers of windings, ni+ / ni-, of the receiver elements differentially wired together (Si+ / Si-, Ci+ / Ci-) is inversely proportional to the corresponding induction ratio, Bi+ / Bi-, in the receiver elements.

**6.** Inductive measurement system as Paragraph 3, distinguished by the fact that the receiver coils (Si+ / Si-, Ci+ / Ci-) corresponding to the emitter field distribution in the direction of measurement have different lengths (ls+ / ls-) for at least one section of their windings at right angles to the direction of measurement.

**7.** Inductive measurement system to determine positions, with a coil structure (2) and a material measure (1), which has at least one scale, divided into ranges of varying reluctance or conductivity, with the coil structure (2) covering at least one emitter coil (E) for generating a magnetic field and at least two pairs of receiver coils (Si+ / Si-, Ci+ / Ci-), with each pair having two receiver elements differentially wired together for detecting a magnetic field, and with the emitter coil (E) being inductively coupled with the receiver elements (Si+ / Si-, Ci+ / Ci-), depending on the relative position of the coil structure (2) in relation to the material measure (1), distinguished by the fact that the coil structure (2) has at least one compensation element for flow matching, and with the compensation element covering at least one additional compensation receiver element (Sk+ / Sk-, Ck+ / Ck-; Ksin, Kcos), wired together with a receiver element (Si+ / Si-, Ci+ / Ci-).

**8.** Inductive measurement system as Paragraph 7, distinguished by the fact that the compensation receiver element (Sk+ / Sk-, Ck+ / Ck-; Ksin, Kcos) is positioned ouside the emitter area (E).

**9.** Inductive measurement system as Paragraph 7, distinguished by the fact that the compensation receiver element (Sk+ / Sk-, Ck+ / Ck-; Ksin, Kcos) is positioned inside the emitter area (E).

10. Inductive measurement system as one of Paragraphs 1 to 9, distinguished by the fact that the sensor structures are largely independent of environmental influences and distance fluctuations (d) within technically acceptable tolerances.

11. Inductive measurement system as one of previous paragraphs, distinguished by the fact that the coil structure (2) is implemented in a multi-layer array.

12. Inductive measurement system as Paragraph 11, distinguished by the fact that large-surface metal layers, which are electrically connected to a fixed potential, are provided for between and / or outside the coil structure planes for screening and / or capacitive decoupling.

13. Inductive measurement system as one of the preceeding paragraphs, distinguished by the fact that the emitter width for the suppression of harmonics in the output signal amounts to $n\lambda + / -k$, where: n is a natural number, $\lambda$ is the scale period and k is a correction factor.

14. Measurement system as one of the preceeding paragraphs, distinguished by the fact that the winding distribution of the emitter (E) is not periodically uniform for the suppression of harmonics in the output signal.

15. Measurement system as one of the preceeding paragraphs, distinguished by the fact that the receiver elements (Si+ / Si-, Ci+ / Ci-_ for suppressing harmonics in the output signal are $\lambda/2 \pm k$ wide, where: $\lambda$ is the scale period and k a correction factor.

16. Measurement system as one of the preceeding paragraphs, distinguished by the fact that the receiver elements (Si+ / Si-, Ci+ / Ci-) for suppressing the harmonics of the output signal have a distance between them of $\lambda/2 + / -k$, in the context of a differential pair of receivers in the measurement system, where: $\lambda$ is the scale period and k is a correction factor.

**Revendications**

1. Dispositif de mesure inductif pour l'acquisition de position comprenant une structure de bobine (2) et une mesure matérialisée (1), qui présente au moins une division en zones de réluctance ou conductibilité différente, la structure de bobine (2) comprenant au moins une bobine émettrice (E) pour la génération d'un champ magnétique et au moins deux paires de bobines réceptrices (Si+/Si-, Ci+/Ci-), chaque paire présentant deux éléments récepteurs commutés l'un vers l'autre au niveau du différentiel pour l'acquisition d'un champ magnétique, la bobine émettrice (E) étant couplée de façon inductive avec les éléments récepteurs (Si+/Si-, Ci+/Ci-) en fonction de la position relative de la structure de bobine (2) par rapport à la mesure matérialisée, **caractérisé en ce que** la structure de bobine (2) présente au moins un élément de compensation pour l'adaptation du flux, l'élément de compensation comprenant au moins une bobine émettrice de compensation (EK1, EK2, KS, KC) supplémentaire pour la génération d'un champ de compensation.

2. Dispositif de mesure inductif selon la revendication 1, **caractérisé en ce que** la bobine émettrice de compensation (EK1, EK2, KS, KC) est alimentée indépendamment de la bobine émettrice (E).

3. Dispositif de mesure inductif pour l'acquisition de position comprenant au moins une structure de bobine (2) et une mesure matérialisée (1), qui présente au moins une division en zones de réluctance ou conductibilité différente, la structure de bobine (2) comprenant au moins une bobine émettrice (E) pour la génération d'un champ magnétique et au moins deux paires de bobines réceptrices (Si+/Si-, Ci+/Ci-), chaque paire présentant deux éléments récepteurs commutés l'un vers l'autre au niveau du différentiel pour l'acquisition d'un champ magnétique, la bobine émettrice (E) étant couplée de façon inductive avec les éléments récepteurs (Si+/Si-, Ci+/Ci-) en fonction de la position relative de la structure de bobine (2) par rapport à la mesure matérialisée (1), **caractérisé en ce que** la structure de bobine (2) présente au moins un élément de compensation pour l'adaptation du flux, l'élément de compensation pour l'adaptation du flux comprenant différentes géométries des éléments récepteurs (Si+/Si-, Ci+/Ci-) commutés l'un par rapport à l'autre au niveau du différentiel.

4. Dispositif de mesure inductif selon la revendication 3, **caractérisé en ce que** les surfaces de réception (Ai+, Ai-) d'éléments récepteurs (Si+/Si-, Ci+/Ci-) commutés ensemble au niveau du différentiel sont inversement proportionnelles au rapport d'induction Bi+/Bi- correspondant dans les éléments récepteurs.

**5.** Dispositif de mesure inductif selon la revendication 3, **caractérisé en ce que** le rapport des nombres de spires ni+/ni- d'éléments récepteurs (Si+/Si-, Ci+/Ci-) commutés ensemble au niveau du différentiel est inversement proportionnel au rapport d'induction Bi+/Bi- correspondant dans les éléments récepteurs.

**6.** Dispositif de mesure inductif selon la revendication 3, **caractérisé en ce que** les bobines réceptrices (Si+/Si-, Ci+/Ci-) présentent des longueurs différentes (ls+, ls-) transversalement au sens de mesure en fonction de la répartition du champ émetteur dans le sens de mesure au moins pour une partie de leurs spires.

**7.** Dispositif de mesure inductif pour l'acquisition de la position comprenant une structure de bobine (2) et une mesure matérialisée (1), qui présente au moins une division en zones de réluctance ou conductibilité différente, la structure de bobine (2) comprenant au moins une bobine émettrice (E) pour la production d'un champ magnétique et au moins deux paires de bobines réceptrices (Si+/Si-, Ci+/Ci-), chaque paire présentant deux éléments récepteurs commutés l'un vers l'autre au niveau du différentiel pour l'acquisition d'un champ magnétique, la bobine émettrice (E) étant couplée de façon inductive avec les éléments récepteurs (Si+/Si-, Ci+/Ci-) en fonction de la position relative de la structure de bobine (2) par rapport à la mesure matérialisée (1), **caractérisé en ce que** la structure de bobine (2) présente au moins un élément de compensation pour l'adaptation du flux, l'élément de compensation comprenant au moins un élément récepteur de compensation (Sk+/Sk-, Ck+/Ck- ; Ksin, Kcos) supplémentaire commuté ensemble avec un élément récepteur (Si+/Si-, Ci+/Ci-).

**8.** Dispositif de mesure inductif selon la revendication 7, **caractérisé en ce que** l'élément récepteur de compensation (Sk+/Sk-, Ck+/Ck- ; Ksin, Kcos) est placé à l'extérieur de la surface émettrice (E).

**9.** Dispositif de mesure inductif selon la revendication 7, **caractérisé en ce que** l'élément récepteur de compensation (Sk+/Sk-, Ck+/Ck- ; Ksin, Kcos) est placé à l'intérieur de la surface émettrice (E).

**10.** Dispositif de mesure inductif selon l'une des revendications 1 à 9, **caractérisé en ce que** les structures de capteur sont largement indépendantes des influences extérieures et des variations de distance (d) dans des tolérances acceptables au plan technique.

**11.** Dispositif de mesure inductif selon l'une des revendications précédentes, **caractérisé en ce que** la structure de bobine (2) est réalisée dans un dispositif multicouches.

**12.** Dispositif de mesure inductif selon la revendication 11, **caractérisé en ce qu'**il est prévu entre et/ou à l'extérieur des plans de structure de bobine pour le blindage et/ou pour le découplage capacitif, des couches de métal de grande surface, qui sont raccordées électriquement à un potentiel fixe.

**13.** Dispositif de mesure inductif selon l'une des revendications précédentes, **caractérisé en ce que** la largeur d'émission est $n\lambda$+/-k pour la suppression des harmoniques dans le signal de sortie, sachant que n est un nombre naturel, $\lambda$ est la période de division et k est une valeur de correction.

**14.** Dispositif de mesure selon l'une des revendications précédentes, **caractérisé en ce que** la division d'enroulement des émetteurs (E) n'est pas périodiquement uniforme pour la suppression des harmoniques dans le signal de sortie dans le plan d'émetteur.

**15.** Dispositif de mesure selon l'une des revendications précédentes, **caractérisé en ce que**, pour la suppression des harmoniques dans le signal de sortie, les éléments récepteurs (Si+/Si-, Ci+/Ci-) présentent une largeur de $\lambda/2 \pm$ k, sachant que $\lambda$ est la période de division et k une valeur de correction.

**16.** Dispositif de mesure selon l'une des revendications précédentes, **caractérisé en ce que**, pour la suppression des harmoniques du signal de sortie, les éléments récepteurs (Si+/Si-, Ci+/Ci-) présentent dans le cadre d'une paire de différentiel de récepteur dans le sens de mesure un espacement l'un par rapport à l'autre de $\lambda/2 \pm$ k, sachant que $\lambda$ est la période de division et k une valeur de correction.

FIG. 1

a)

b)

b1    b2

c)

c1    c2

d)

d1    d2

e)

f)

FIG. 2

FIG. 3

EP 1 164 358 B1

FIG. 4

FIG. 5

FIG. 6

FIG. 7

a)

E

$$\frac{3\lambda}{4}$$

= m

m

λ/2

= m

[+] [−]   [+] [−] [−] [+]        [−] [+]

s+      c+   c−            s−

d

b)

c)

Bs+      Bc+   Bc−          Bs−

|B̄s+| = |B̄s−|            |B̄c+| ≠ |B̄c−|

FIG. 8

FIG. 9

FIG.10

**FIG.11**

$ni + \neq ni -$

**FIG.12**

$ls+ \neq ls-$

a)                    b)

**FIG.13**

FIG.14

| EK1 | | Es1 | | Ec1 | | Esi | | Eci | | Esn | | Ecn | | EK2 | |
|---|---|---|---|---|---|---|---|---|---|---|---|---|---|---|---|
| Ck - | Ck + | S1- | S1+ | C1 + | C1 - | Si + | Si - | Ci - | Ci + | Sn - | Sn + | Cn + | Cn - | Sk + | Sk - |

FIG.15

| EK1 | | Es1 | | Ec1 | | Esi | | Eci | | Esn | | Ecn | | EK2 | |
|---|---|---|---|---|---|---|---|---|---|---|---|---|---|---|---|
| | | S1- | S1+ | C1 + | C1 - | Si + | Si - | Ci - | Ci + | Sn - | Sn + | Cn + | Cn - | | |

FIG.16

| | | Es1 | | Ec1 | | Esi | | Eci | | Esn | | Ecn | | | |
|---|---|---|---|---|---|---|---|---|---|---|---|---|---|---|---|
| Ck - | Ck + | S1- | S1+ | C1 + | C1 - | Si + | Si - | Ci - | Ci + | Sn - | Sn + | Cn + | Cn - | Sk + | Sk - |

FIG.17

FIG.18

FIG.19

FIG.20

a)

b)

FIG.21

FIG. 22

FIG. 23

FIG. 24

**FIG. 25**

**FIG. 26**

$$U_{KOMP} = U_1 + U_2$$

FIG. 27

FIG. 28

FIG. 29

SUBSTRAT

MET 1
MET 2
MET 3
MET 4
MET 5
MET 6
MET 7
MET 8
MET 9

MET 1 } KOMP
MET 2 }
MET 3    SCHIRM
MET 4 } EMITTER
MET 5 }
MET 6    SCHIRM
MET 7 } EMPFÄNGER
MET 8 }
MET 9    SCHIRM

MASSVERKÖRPERUNG

EP 1 164 358 B1

EP 1 164 358 B1

FIG. 30